# EUROPÄISCHE PATENTSCHRIFT

(11) **EP 3 568 364 B1**
(45) Veröffentlichungstag und Bekanntmachung des Hinweises auf die Patenterteilung: **22.09.2021**
(21) Anmeldenummer: 18702624.0
(22) Anmeldetag: 16.01.2018
(51) Int. Cl.: B65G 19/02, B65G 47/61

(54) **FÖRDERGUTBEHÄLTER MIT AUSWERFVORRICHTUNG UND ZUGEHÖRIGE HÄNGEFÖRDERVORRICHTUNG**
CONVEYED GOODS CONTAINER HAVING AN EJECTION DEVICE AND ASSOCIATED SUSPENDED CONVEYING DEVICE
CONTENANT POUR PRODUIT À TRANSPORTER COMPRENANT UN DISPOSITIF D'ÉJECTION ET DISPOSITIF DE TRANSPORT SUSPENDU ASSOCIÉ

(30) Priorität: 16.01.2017 DE 202017100206 U
(43) Veröffentlichungstag der Anmeldung: 20.11.2019
(60) Teilanmeldung: 21189937.2
(73) Patentinhaber: TGW Mechanics GmbH, 4600 Wels (AT)
(72) Erfinder: HERZOG-LANG, Viktor, 75210 Keltern (DE); REISCHL, Josef, A-4623 Gunskirchen (AT)
(74) Vertreter: Burger, Hannes
(86) Internationale Anmeldenummer: PCT/EP2018/050972
(87) Internationale Veröffentlichungsnummer: WO 2018/130712

(56) Entgegenhaltungen:
- EP-A1- 0 638 501
- EP-A1- 2 620 394
- EP-A1- 3 028 961
- WO-A1-2014/044601
- WO-A1-2015/124524
- WO-A1-2016/120030
- WO-A2-90/03853
- DE-A1- 3 837 115
- DE-A1-102004 018 569
- DE-A1-102008 026 720
- JP-A- H07 304 514
- US-A1- 2003 135 300

## Beschreibung

### Gebiet der Erfindung

Die Erfindung betrifft eine Beladestation mit einem Fördergutbehälter und ein Verfahren zum manuellen oder automatischen Beladen eines Fördergutbehälters mit einem Fördergut, wie in den Ansprüchen 1 und 25 beschrieben. Die Erfindung betrifft auch eine Entladestation mit einem Fördergutbehälter und ein Verfahren zum Entladen eines mit zumindest einem Fördergut beladenen Fördergutbehälters, wie in den Ansprüchen 11 und 24 beschrieben. Zudem betrifft die Erfindung ein Hängefördersystem umfassend eine Hängefördervorrichtung mit einem Fördergutbehälter zum Transportieren von Fördergut, eine Beladestation und eine Entladestation, wie im Anspruch 23 beschrieben.

### Stand der Technik

In automatisierten Warenlagern, Produktionsstätten und beim Warentransport wie zum Beispiel im Versandhandel ist es erforderlich, Fördergut möglichst automatisiert in Fördergutbehältern aufzunehmen. In diesen Fördergutbehältern können die Waren vor ihrer Auslieferung gelagert werden und gelangen so an die Station, in der sie für den Weitertransport zum Kunden verpackt werden. Der Transport innerhalb der Lager erfolgt üblicherweise über Hängefördervorrichtungen. Die Fördergutbehälter sind dabei meist Taschen, die wie Stoffbeutel gefertigt sind und oben mit einer Art Drahtbügel in ein Schienensystem eingehängt sind. Ein derartiger Fördergutbehälter ist z.B. aus der WO 2014/012965 A1 bekannt. Über ein Gestänge werden dessen Seitenwandelemente so angesteuert, dass die über einen Verbindungsbereich miteinander verbundenen Seitenwandelemente aufgeklappt werden können. Im Bereich einer Beladestation werden die Fördergutbehälter zudem in eine horizontale oder geneigte Stellung überführt.

Vergleichbare Fördergutbehälter und zugehörige Hängefördervorrichtungen sind beispielsweise aus der DE 10 2004 018 569 A1, EP 2 130 968 A1 oder EP 2 196 415 A bekannt. Die dort beschriebenen Transporttaschen bestehen aus flexiblen Materialien in Form einer Schlaufe, in der das Fördergut gehalten wird. Zum Beladen werden diese Transporttaschen von oben geöffnet, um das Fördergut in die Schlaufe einbringen zu können. Ein Entladen erfolgt dadurch, dass das Fördergut entweder seitlich aus der Schlaufe entnommen oder ausgestoßen wird oder z.B. gemäß der EP 2 130 968 A1 die Schlaufe nach unten geöffnet wird. Ferner ist aus der DE 103 54 419 A1 ein Fördergutbehälter bekannt, der eine relativ steife und flache Kunststoffwand mit einem Ausschnitt zum Be- und Entladen mit Fördergut aufweist.

Andere Fördergutbehälter sind gefertigt wie hängende flache Wannen aus Kunststoff, die einseitig mit elastischen Stoffen bezogen sind, was das Fördergut einklemmt.

Es ist bekannt, solche Fördergutbehälter mechanisiert zu beladen und manuell wieder zu entladen. Ein Transporttakt richtet sich nach dem langsamsten Vorgang, der auch von der Menge an transportiertem Fördergut abhängt. Insbesondere eine hohe Anzahl an einzelnen Fördergütern kann das Be- und/oder Entladen verlangsamen. Beispielsweise können das Entladen und/oder das Zusammenfügen zerlegter Transportbehälter den maximal möglichen Transporttakt bestimmen. Die EP 2 686 258 B1 betrifft ein Hängefördersystem mit einer Transporttasche zur automatischen Entladung eines geladenen Förderguts und mit einer Entladestation. Die Transporttasche weist einen horizontalen Boden auf, auf dem das Fördergut für Transportzwecke gelagert werden kann. Der Boden wirkt mit einer Hubeinrichtung zusammen, die eingerichtet ist, den Boden, der mit mindestens einem Fördergut beladenen Transporttasche, wenn sich die Transporttasche in einer Entladestellung befindet in einer vertikalen Richtung in der Art anzuheben, dass das mindestens eine Fördergut mittels einer Schubeinrichtung durch eine Stirnseite eines Grundkörpers der Transporttasche zentral ausschiebbar ist, und wobei die Schubeinrichtung einen Schieber aufweist, der durch eine andere Stirnseite des Grundkörpers in ein Inneres des Grundkörpers eingreift, wo sich das mindestens eine Fördergut befindet, wenn der Boden angehoben ist. Zum Entladen sind also die zwei gegenüberliegenden geöffneten Stirnseiten, der in der vertikalen Richtung anhebbare Boden sowie der durch eine der Stirnseiten durchgreifende Schieber der Schubeinrichtung erforderlich.

Die EP 3 028 961 A1 offenbart einen Fördergutbehälter für eine Hängefördervorrichtung zum Transportieren von Fördergut, umfassend eine Vorderwand, eine Rückwand, einen Boden und einen Rahmen, durch welchen der Fördergutbehälter zwischen einer ersten Stellung und einer zweiten Stellung verstellbar ist. Die Vorderwand ist mit einer fensterartigen und größenangepassten Öffnung versehen, welche derart positioniert und ausgestaltet ist, dass sie in der ersten Stellung einen zum sicheren Aufnehmen des Förderguts geeigneten Abstand von einem tiefsten Punkt des Fördergutbehälters hat und in der zweiten Stellung an den tiefsten Punkt des Fördergutbehälters heranreicht, so dass das Fördergut in der zweiten Stellung mittels Schwerkraft durch die Öffnung aus dem Fördergutbehälter herausgleiten kann.

Die WO 2014/044601 A1 und JP H07 304514 A offenbaren jeweils einen Fördergutbehälter, eine Beladestation zum automatischen Beladen des Fördergutbehälters und eine Entladestation zum automatischen Entladen des Fördergutbehälters.

Die WO 2014/044601 A1 beschreibt eine Beladestation nach dem Oberbegriff des Anspruchs 1, eine Entladestation nach dem Oberbegriff des Anspruchs 11, sowie ein Verfahren nach den Oberbegriffen der Ansprüche 24 und 25.

### Zusammenfassung der Erfindung

Die Aufgabe der Erfindung liegt darin, eine verbesserte Beladestation und ein verbessertes Verfahren zum manuellen oder automatischen Beladen eines Fördergutbehälters mit einem Fördergut bzw. eine verbesserte Entladestation und ein verbessertes Verfahren zum Entladen eines mit zumindest einem Fördergut beladenen Fördergutbehälters zu schaffen. Es ist auch eine Aufgabe der Erfindung, ein verbessertes Hängefördersystem bereitzustellen.

Die Aufgabe der Erfindung wird durch die Merkmale und Maßnahme der Ansprüche 1, 11, 23, 24 und 25 gelöst.

Die Beladestation ist zum manuellen oder automatischen Beladen eines Fördergutbehälters ausgebildet und umfasst
- eine Hängefördervorrichtung zum Antransport des Fördergutbehälters in die Beladestation und Abtransport des Fördergutbehälters aus der Beladestation,
- eine Öffnungsvorrichtung zum Verstellen des Fördergutbehälters zwischen der Schließstellung, in welcher der Aufbewahrungsraum unzugänglich und/oder volumenminimiert ist, und der Öffnungsstellung, in welcher der Aufbewahrungsraum zugänglich ist, und
- zum Beladen des in die Öffnungsstellung verstellten Fördergutbehälters
   i) entweder eine Beladevorrichtung,
   ii) oder eine automatisiert betriebene Beschickungsvorrichtung,
   iii) oder die Beladevorrichtung und die automatisiert betriebene Beschickungsvorrichtung umfasst,
   wobei die Beladevorrichtung oder die Beschickungsvorrichtung eine Arbeitsebene definiert, die mit dem Boden des Fördergutbehälters im Wesentlichen fluchtend oder geringfügig oberhalb des Bodens des Fördergutbehälters verläuft, sodass ein im Wesentlichen stufenloser Übergang zwischen der Arbeitsebene und dem Boden ausgebildet ist.

Der Begriff "im Wesentlicher stufenloser Übergang" ist dabei so zu verstehen, dass zwischen der Arbeitsebene und dem Boden zwar ein begrenzter Stufensprung möglich ist, dieser dann jedoch so niedrig ist, dass auch ein kleines Fördergut nicht in freiem Fall auf den Boden abgeworfen wird. Das Fördergut kann vielmehr von der Arbeitsebene auf den Boden gekippt werden.

Insbesondere für ein manuelles Beladen kann die Arbeitsebene durch einen Auflagetisch gebildet werden. Auf diesem kann auf einfache Art und Weise ein manuelles Verschieben des Förderguts durch die Beladeöffnung hindurch in den Aufbewahrungsraum des Fördergutbehälters erfolgen. Dazu wird der Fördergutbehälter zuvor in die Öffnungsstellung verstellt. Gemäß einer Alternative kann jedoch unter der Arbeitsebene auch eine gedachte Ebene verstanden werden, die mittels einer Mechanisierung, beispielsweise eines Roboters gebildet wird. Entlang der gedachten Arbeitsebene kann mittels des Roboters das Fördergut durch die Beladeöffnung hindurch in den Aufbewahrungsraum des Fördergutbehälters bewegt werden. Es ist auch möglich, dass das Fördergut durch eine Fördervorrichtung, beispielweise einen Gurtförderer durch die Beladeöffnung hindurch in den Aufbewahrungsraum des Fördergutbehälters bewegt wird. Die Förderebene bildet in diesem Fall die Arbeitsebene. Auch nach diesen Ausführungen wird das Fördergut nicht "abgeworfen" sondern schonend abgelegt. Nach einer anderen Ausführung kann ein Pusher und ein Auflagetisch verwendet werden, wobei das Fördergut auf der Arbeitsebene aufliegt und mechanisiert durch die Beladeöffnung hindurch in den Aufbewahrungsraum des Fördergutbehälters transportiert wird.

Für eine manuelle Betätigung kann die Öffnungsvorrichtung den Rahmen des Fördergutbehälters umfassen, welcher gegriffen und verschwenkt werden kann. Für eine automatische Betätigung kann die Öffnungsvorrichtung eine auf den Rahmen einwirkende Mechanisierung aufweisen, die das Verschwenken des Rahmens bewirkt.

Zum Erhöhen einer Betriebssicherheit kann zusätzlich eine Feststellvorrichtung zum zeitweisen Festsetzen des Fördergutbehälters während eines Beladevorgangs vorgesehen sein. Mittels der Feststellvorrichtung kann der Fördergutbehälter positioniert und/oder in einer gewünschten Position gehalten werden. Ein versehentliches Hinausfahren des Fördergutbehälters aus der Beladestation während eines Beladevorgangs kann verhindert werden.

Bei einem bevorzugten Ausführungsbeispiel kann die Beladestation zusätzlich ein Führungsprofil zum Führen eines Rahmens des Fördergutbehälters aufweisen. Eine Führung des Rahmens bewirkt auch eine präzise gewünschte Bewegungsbahn des gesamten Fördergutbehälters. Der Fördergutbehälter kann also auch auf eine gewünschte Art und Weise innerhalb der Beladestation verlagert und/oder positioniert werden. Das Führungsprofil kann alternativ oder zusätzlich zum Öffnen des Fördergutbehälters ausgelegt sein.

Außerdem kann vorgesehen sein, dass die Öffnungsvorrichtung der Beladestation zumindest eine mittels eines Antriebs zwischen einer ersten Klappenstellung und einer zweiten Klappenstellung bewegbare Taschenöffnungsklappe zum Verstellen des Fördergutbehälters zwischen der Schließstellung und der Öffnungsstellung aufweist. Die Taschenöffnungsklappe wirkt bevorzugt auf den Rahmen des Fördergutbehälters. Dazu kann die Taschenöffnungsklappe um einen Winkel verschwenkbar sein und mittels dieser Verschwenkbewegung den Rahmen verlagern, insbesondere verschwenken. In der Schließstellung ist die Taschenöffnungsklappe aus einer Bewegungsbahn des Rahmens herausgeschwenkt. In der Öffnungsstellung befindet sich die Taschenöffnungsklappe bevorzugt unterhalb des Rahmens und bringt diesen in eine horizontale Position. Es ist denkbar, zwei auf gegenüberliegenden Seiten des Fördergutbehälters wirkende und synchron angesteuerte Taschenöffnungsklappen zu verwenden. Dadurch können beim Öffnen des Fördergutbehälters ein verwindungsfreies Verlagern des Rahmens und/oder eine Entlastung des Schwenklagers erzielt werden. Es können schwerere Fördergüter in den Fördergutbehälter eingeladen werden.

Bei einer weiteren möglichen Ausführung der Beladestation ist vorgesehen, dass die Taschenöffnungsklappe in der zweiten Klappenstellung eine in Fahrtrichtung des Fördergutbehälters verlaufende Führungsfläche zum Führen des Rahmens bei einem Verlassen der Beladestation aufweist. Durch die Führungsfläche kann eine gewünschte Bewegungsbahn des Fördergutbehälters beim Verlassen der Beladestation erreicht werden. Gegebenenfalls können auch eventuelle beim Beschleunigen des Fördergutbehälters auftretende Vibrationen und/oder Schwingungen gedämpft werden, sodass eine insgesamt ruhigere Fahrt und damit ein schonenderer Transport des Förderguts innerhalb des Fördergutbehälters möglich sind.

Außerdem ist es möglich, dass der Rahmen in der zweiten Klappenstellung zwischen der Taschenöffnungsklappe und dem Führungsprofil kraftschlüssig fixiert ist. Die Taschenöffnungsklappe kann an den Rahmen angepresst werden, sodass dieser wiederum gegen das Führungsprofil gepresst wird. Dadurch kann der Kraftschluss bewirkt werden. Durch eine Fixierung des Rahmens kann neben einem Bewirken der Öffnungsstellung auch der gesamte Fördergutbehälter innerhalb der Beladestation arretiert bzw. fixiert werden.

Die Entladestation ist zum Entladen des mit zumindest einem Fördergut beladenen Fördergutbehälters ausgebildet und umfasst
- eine Hängefördervorrichtung zum Antransport des Fördergutbehälters in die Entladestation und Abtransport des Fördergutbehälters aus der Entladestation,
- eine Öffnungsvorrichtung zum Verstellen des Fördergutbehälters zwischen der Schließstellung, in welcher das Fördergut im Aufbewahrungsraum verstaut oder verstaubar ist, und der Öffnungsstellung, in welcher das Fördergut im Aufbewahrungsraum zugänglich ist, und
- eine Entladevorrichtung zum Entladen des in die Öffnungsstellung verstellten Fördergutbehälters, mit welcher der Boden zwischen einer Transportstellung, in der das Fördergut im Aufbewahrungsraum gelagert ist, und einer Auswerfstellung, in der das Fördergut aus dem Aufbewahrungsraum auswerfbar ist, neigbar ist.

In der Entladestation kann der Fördergutbehälter zunächst von der Schließstellung in die Öffnungsstellung gebracht werden. Entweder kann noch während dem Öffnungsvorgang des Fördergutbehälters oder nach dem Öffnungsvorganges des Fördergutbehälters die Neigung des Bodens so verstellt werden, dass das Fördergut aus dem Aufbewahrungsraum auswerfbar ist, beispielsweise von alleine aus diesem hinausgleitet. Das Verändern der Neigung kann mittels einer Mechanisierung oder manuell betätigt erfolgen. Ein etwaiges Hineingreifen in den Aufbewahrungsraum ist zum Entladen des Fördergutbehälters nicht erforderlich. Das Entladen kann dadurch besonders einfach und sicher erfolgen. Etwaige Kollisionen einer Bedienperson und/oder eines Roboters und/oder Pushers mit dem Fördergutbehälter können nicht auftreten, da ein Hineingreifen bzw. Hineinfahren in eine Bewegungsbahn des Fördergutbehälters zum Entladen nicht erforderlich sind. Vielmehr rutscht das Fördergut selbsttätig aus diesem hinaus und kann dann entsprechend weiterverarbeitet werden.

Eine bevorzugte Gestaltung der Entladestation sieht analog zur Gestaltung der Beladestation vor, dass zusätzlich eine Feststellvorrichtung zum zeitweisen Festsetzen des Fördergutbehälters während eines Entladevorgangs vorgesehen ist. Es ergeben sich die vorab beschriebenen Vorteile.

Außerdem kann zusätzlich ein Führungsprofil zum Führen eines Rahmens des Fördergutbehälters vorgesehen sein. Das Führungsprofil kann analog aufgebaut sein wie bei der Beladestation, wobei sich dieselben Vorteile ergeben.

Bevorzugt weist die Öffnungsvorrichtung zumindest eine mittels eines Antriebs zwischen einer ersten Klappenstellung und einer zweiten Klappenstellung bewegbare Taschenöffnungsklappe zum Verstellen des Fördergutbehälters zwischen der Schließstellung und der Öffnungsstellung auf. Es ist denkbar, dass die Taschenöffnungsklappe in der zweiten Klappenstellung eine in Fahrtrichtung des Fördergutbehälters verlaufende Führungsfläche zum Führen des Rahmens bei einem Verlassen der Entladestation aufweist. Bei einem weiteren Ausführungsbeispiel der Entladestation, ist der Rahmen in der zweiten Klappenstellung zwischen der Taschenöffnungsklappe und dem Führungsprofil kraftschlüssig fixiert. Die Taschenöffnungsklappe ist bevorzugt gleich aufgebaut wie in der Beladestation. Hinsichtlich der Funktion und Wirkungsweise ergeben sich die vorab beschrieben Vorteile.

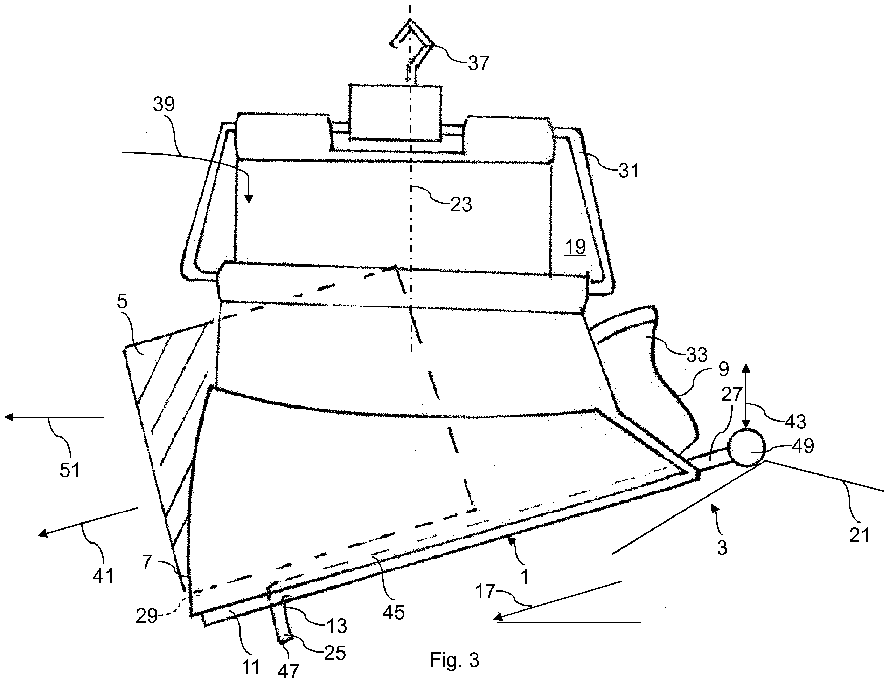

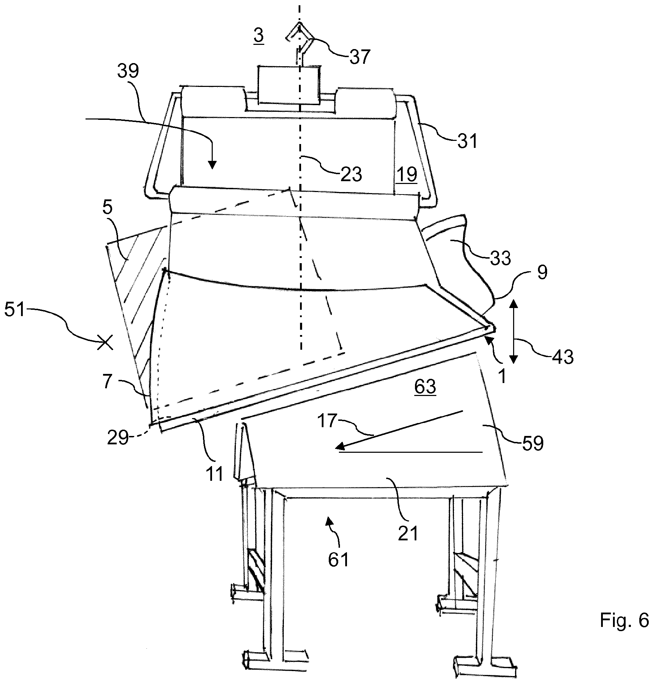

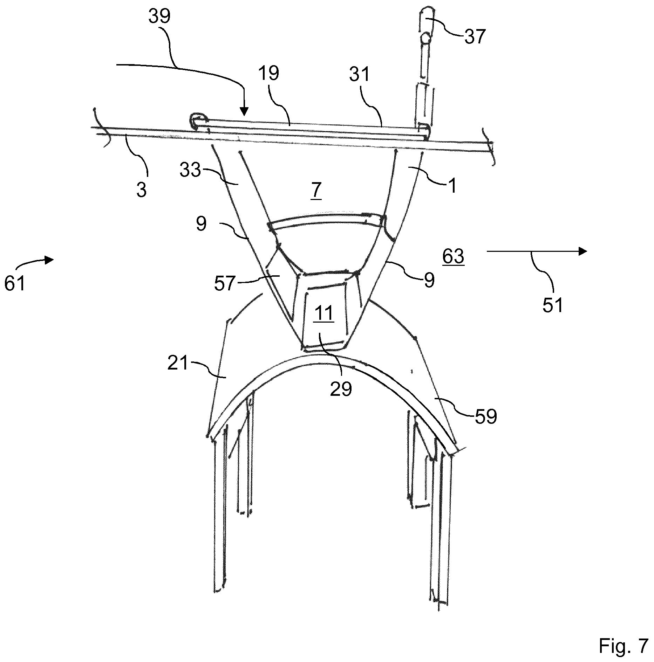

Eine optionale Mitnehmermechanik der Entladevorrichtung der Entladestation ermöglicht, dass der Boden zwischen der Transportstellung und der Auswerfstellung verstellbar ist. Die Mitnehmermechanik ist in einer bevorzugten Ausführung gemäß Fig. 6, 7 ausgebildet. Die Mitnehmermechanik kann eine geneigte Fläche aufweisen, die bei der Vorbeifahrt mit dem Fördergutbehälter, insbesondere mit dessen Boden, in einen Anlagekontakt bringbar ist. Dadurch kann der Boden so verlagert werden, dass das Fördergut einfach auswerfbar ist. Die Fläche kann in Fahrtrichtung zunächst ansteigend und dann wieder abfallend an der Mitnehmermechanik vorgesehen sein. Dadurch können ein Anheben und danach ein Absenken des Bodens ohne weitere Hilfsmittel erfolgen. Die sich ergebende Bewegung des Bodens erfolgt dadurch möglichst sanft und ruckfrei. Zusätzlich oder alternativ kann die Fläche auch seitlich und/oder quer zu der Fahrtrichtung, insbesondere um circa 90° zu der Fahrtrichtung angeordnet, geneigt sein. Dadurch kann ein seitliches Auswerfen des Förderguts erfolgen. Alternativ kann mittels der Mitnehmermechanik beispielsweise ein Hebel (Auslösehebel), der mit dem Boden mechanisch verbunden ist, betätigt werden, beispielsweise angehoben und abgesenkt werden um die Neigung des Bodens zu verstellen, gemäß einer beispielhaften Ausführung nach Fig. 3. Über einen optionalen Auslösehebel kann der Boden mechanisiert oder manuell zwischen der Transportstellung und der Auswerfstellung verstellt werden. In einem einfachen Fall kann dadurch der Boden einseitig angehoben und geneigt werden.

Bei einer weiteren möglichen Ausführung kann die Entladevorrichtung eine mittels eines Entladeantriebs zwischen einer Ausgangsstellung und einer Betätigungsstellung bewegbare Taschenentladungsvorrichtung, insbesondere Taschenentladungsbügel, zum Verstellen des Bodens zwischen der Transportstellung und der Auswerfstellung aufweisen. Der Taschenbügel der Taschenentladungsvorrichtung kann beispielsweise mittels des Entladeantriebs verlagert oder bevorzugt verschwenkt werden und dadurch so an den Boden angelegt werden, dass dieser bei einer weiteren Verlagerung bzw. Verschwenkung geneigt, also einseitig angehoben wird. Dadurch kann das Fördergut aus dem Aufbewahrungsraum herausrutschen. Nach einer erfolgten Entladung kann die Taschenentladungsvorrichtung, also insbesondere der Taschenentladungsbügel wieder aus einer Bewegungsbahn des Fördergutbehälters herausbewegt bzw. herausgeschwenkt werden und der Fördergutbehälter in die Schließstellung verstellt werden, sodass dieser die Entladestation kollisionsfrei verlassen kann.

Nach einer vorteilhaften Ausführung umfasst ein Hängefördersystem eine Hängefördervorrichtung mit einem Fördergutbehälter zum Transportieren von Fördergut, eine vorab beschriebene Beladestation zum manuellen oder automatischen Beladen eines Fördergutbehälters und eine vorab beschriebene Entladestation zum Entladen eines mit zumindest einem Fördergut beladenen Fördergutbehälters. Mit dem Hängefördersystem können auf einfache Art und Weise Transportaufgaben von Fördergut für Versandzwecke bewerkstelligt werden. Im Übrigen ergeben sich die vorab beschriebenen Vorteile.

Die Beladestation und die Entladestation verwenden jeweils einen Fördergutbehälter umfassend eine Vorderwand, eine Rückwand, einen an die Vorderwand und Rückwand angrenzenden Boden, einen Aufbewahrungsraum zwischen der Vorderwand, der Rückwand und dem Boden, in dem das Fördergut transportierbar ist. Der Boden bildet eine erste Längskante, an welche die Vorderwand anschließt, eine zur ersten Längskante mit einem Abstand verlaufende zweite Längskante, an welche die Rückwand anschließt, eine zwischen der ersten Längskante und der zweiten Längskante verlaufende erste Stirnkante, eine zwischen der ersten Längskante und der zweiten Längskante verlaufende zweite Stirnkante aus. Zusätzlich umfasst der Fördergutbehälter in seiner Öffnungsstellung eine durch die Vorderwand und Rückwand begrenzte und an die erste Stirnkante angrenzende Beladeöffnung oder Entladeöffnung, durch welche der Fördergutbehälter mit dem Fördergut beladen oder durch welche der Fördergutbehälter entladen werden kann, wenn dieser in die Öffnungsstellung verstellt ist. Der Boden bildet zudem eine in die Beladeöffnung oder Entladeöffnung mündende Aufnahmefläche aus, auf welcher das Fördergut lagern kann, und welche sich zwischen den beiden Längskanten und den beiden Stirnkanten erstreckt und welche eine Gleitfläche definiert. In einer Schließstellung ist der Aufbewahrungsraum unzugänglich und/oder volumenminimiert und es kann ein in den Aufbewahrungsraum eingebrachtes Fördergut transportiert werden. In einer Öffnungsstellung ist der Aufbewahrungsraum zugänglich und es kann der Fördergutbehälter beladen und/oder entladen werden. In der Öffnungsstellung verläuft der Boden im Wesentlich horizontal zwischen der ersten Längskante und der zweiten Längskante.

Insbesondere kann der Fördergutbehälter auch einen Rahmen umfassen, durch den der Fördergutbehälter zwischen der Öffnungsstellung und der Schließstellung verstellbar ist.

Die Vorderwand, die Rückwand und der Boden des Fördergutbehälters weisen ein an einem Rahmen aufgehängtes biegeschlaffes Material auf. Mittels des Rahmens und des biegeschlaffen Materials sowie des Bodens kann der Aufbewahrungsraum aufgespannt werden. Unter einem biegeschlaffen Material kann ein Stoff, eine Folie, ein Geflecht, ein Gewirke, ein Gewebe und/oder ähnliches verstanden werden. Mittels des aufgehängten biegeschlaffen Materials kann ein sehr leichter und flexibel einsetzbarer Fördergutbehälter bereitgestellt werden.

Das Fördergut kann auf der Gleitfläche des Bodens gleitend gelagert werden. Dadurch kann ein Be- und Entladen des Fördergutbehälters vereinfacht werden und insbesondere kann das Fördergut besonders einfach in den Fördergutbehälter hineingeschoben und wieder herausgezogen werden.

Bevorzugt weist der Rahmen eine rechteckige Außenkontur mit zwei Längsseiten und zwei Kurzseiten auf, wobei die Vorderwand und die Rückwand jeweils an einer der Längsseiten des Rahmens gelenkig angebracht sind. Der Rahmen ist relativ zu einem Hängeträger, durch welchen der Fördergutbehälter an einer Hängefördervorrichtung aufhängbar ist, und um eine Achse kippbar. Der Hängeträger ist an einer der Längsseiten, insbesondere an der Längsseite, an welcher die Vorderwand angebracht ist, gelagert. Bevorzugt verläuft die Achse durch die Längsseite des Rahmens, an dem die Vorderwand angebracht ist.

Es ist vorgesehen, dass die Belade- oder Entladeöffnung an die erste Stirnkante angrenzt, was jedoch nicht ausschließt, dass sich zwischen der Vorderwand und Rückwand oberhalb der Belade- oder Entladeöffnung eine Seitenwand erstreckt. Es ist lediglich darauf zu achten, dass die Belade- oder Entladeöffnung so dimensioniert ist, dass das größte Fördergut ohne Kollision mit der Seitenwand durch die Belade- oder Entladeöffnung hindurch bewegt werden kann. Zum Beladen des Fördergutbehälters wird ein Fördergut durch die Beladeöffnung und über die erste Stirnkante hinweg bewegt. Dabei kann die erste Stirnkante auch als Kippkante fungieren, sodass ein zuverlässiges Beladen des Fördergutbehälters möglich ist. Zum Entladen des Fördergutbehälters wird ein am Boden aufliegendes Fördergut durch die Entladeöffnung und über die erste Stirnkante hinweg bewegt. Dabei kann die erste Stirnkante auch als Kippkante fungieren, sodass ein zuverlässiges Entladen des Fördergutbehälters möglich ist.

Nach einer Ausführung der Erfindung ist vorgesehen, dass der Fördergutbehälter einen an die zweite Stirnkante angrenzenden Seitenwandanschlag aufweist, gegen welchen das Fördergut während dem Transport anlegbar ist.

Der zusätzliche Seitenwandanschlag kann während dem Transport das Fördergut im Aufbewahrungsraum halten. Zwar werden übliche Fördergüter in der Schließstellung eines jeweiligen Fördergutbehälters mit ausreichender Haltekraft zwischen der Vorderwand, Rückwand und dem Boden gehalten, jedoch erweist es sich von Vorteil, wenn Fördergüter, die von den Standardabmessungen oder Standardformen abweichen, zusätzlich durch den Seitenwandanschlag gehalten werden. Mittels des Seitenwandanschlags kann also ein versehentliches Herausfallen des Förderguts während einem Transport des Fördergutbehälters vermieden werden. Außerdem kann bei einem Beladen das Fördergut auf einfache Art und Weise in den Fördergutbehälter soweit eingeschoben werden, bis dieses an dem Seitenwandanschlag anliegt. Ein versehentliches Herausfallen des Förderguts bei einem etwaigen zu dynamischen Beladevorgang kann dadurch sicher verhindert werden. Vorzugsweise ist der Boden zu dem Seitenwandanschlag hin geneigt, um eine noch höhere Belade- und Transportsicherheit zu erzielen.

Alternativ ist es aber auch möglich, dass der Fördergutbehälter eine durch die Vorderwand und Rückwand begrenzte und an die zweite Stirnkante angrenzende Öffnung aufweist. Diese Öffnung kann auch als eine Belade- und/oder Entladeöffnung verwendet werden. Der Fördergutbehälter ist in diesem Fall ohne zusätzlichen Seitenwandanschlag ausgebildet. Es hat sich nämlich gezeigt, dass übliche Fördergüter in der Schließstellung des Fördergutbehälters mit ausreichender Haltekraft zwischen der Vorderwand, Rückwand und dem Boden gehalten werden können. Dadurch können die Produktionskosten für den Fördergutbehälter auf ein Minimum reduziert werden, da ein zusätzlicher Arbeitsschritt in der Herstellung des Seitenwandanschlags entfallen kann.

Wird die Öffnung optional als Belade- und/oder Entladeöffnung verwendet, so kann der Fördergutbehälter ungehindert von beiden Seiten beladen und/oder entladen werden. Der Fördergutbehälter kann in der Beladestation entweder von der ersten Seite oder von der zweiten Seite beladen werden. In einer bevorzugten Ausführung ist dann auf einer von der Beladeseite gegenüberliegenden Seite eine stationäre Wand vorhanden, welche dimensioniert ist, die Entladeöffnung zwischen der Vorderwand und Rückwand abzudecken. Die Höhe der Wand kann variieren, jedoch zumindest soweit nach unten ausgebildet, dass die zweite Stirnkante etwas höher liegt als die untere Kante der Wand.

Es kann sich auch von Vorteil erweisen, wenn der Fördergutbehälter beispielsweise in der Beladestation von der ersten Seite beladen und in der Entladestation von der zweiten Seite entladen wird. Es hat sich nämlich gezeigt, dass beim Beladen des Fördergutbehälters von der ersten Seite das Fördergut im hinteren Bereich des Bodens zu liegen kommt, daher näher zur Entladeöffnung als zur Beladeöffnung. Damit kann der Fördergutbehälter schneller entladen werden.

Ein Ausführungsbeispiel sieht vor, dass die erste Längskante eine erste Faltkante und die zweite Längskante eine zweite Faltkante ausbilden. Die Faltkanten fungieren als Materialscharniere, an denen der Boden angelenkt ist, und erlauben eine Relativverlagerung zwischen der Vorderwand und Rückwand. Somit lässt sich der Aufbewahrungsraum bzw. das Aufnahmevolumen vergrößern und verkleinern. Die Fördergutbehälter können für verschieden große Fördergüter verwendet werden und/oder sehr platzsparend leer gepuffert oder transportiert werden.

Wie oben beschrieben, wird das Fördergut durch die Entladeöffnung entladen. Ungeachtet dessen, kann der Fördergutbehälter von einer dem Boden gegenüberliegenden geöffneten Oberseite oder über die Beladeöffnung mit dem Fördergut beladen werden.

Es erweist sich auch von Vorteil, wenn der Fördergutbehälter das Fördergut in der Schließstellung zwischen dem Boden und dem biegeschlaffen Material hält, insbesondere geklemmt wird. Das biegeschlaffe Material ist vorzugsweise anschmiegsam und kann gegebenenfalls elastische Eigenschaften aufweisen. Dadurch kann das Fördergut zumindest bereichsweise, beispielsweise an Ecken und Kanten, enganliegend von dem biegeschlaffen Material umgeben sein. Dadurch kann ein Form- und/oder Kraftschluss zum Halten des Förderguts innerhalb des Fördergutbehälters bewirkt werden. Der Form- und/oder Kraftschluss kann durch eine Schwerkraft des Förderguts verstärkt werden, wobei eine Selbsthemmung eintreten kann.

Das biegeschlaffe Material kann zur Versteifung des Fördergutbehälters zumindest teilweise beplankt sein. Durch die Beplankung kann ein stabilerer Fördergutbehälter bereitgestellt werden. Die Beplankung kann an unterschiedliche Transportaufgaben angepasst sein und beispielsweise stark belastete Bereiche verstärken, insbesondere des biegeschlaffen Materials.

Das biegeschlaffe Material kann vorzugsweise zumindest bereichsweise so elektrisch leitend ausgestaltet sein, dass einer elektrostatischen Aufladung entgegengewirkt werden kann.

Dazu kann es beispielsweise einen elektrischen Oberflächenwiderstand (surface resistance) von größer gleich 10⁶ Ohm und/oder einen spezifischen Oberflächenwiderstand (surface resistivity) zwischen 10⁷ Ohm/Square und 10¹² Ohm/Square aufweisen. In diesem Bereich kann eine elektrostatische Aufladung bereits sehr gut vermieden werden, wobei wegen der vergleichsweise schwachen Leitfähigkeit für den Transport, das Be- und Entladen wichtige Eigenschaften wie Elastizität, Faltbarkeit und Standfestigkeit nicht beeinträchtigt werden. Dadurch kann der Fördergutbehälter für unterschiedlichste Fördergüter verwendet werden, also auch solche, die empfindlich gegenüber elektrostatischen Entladungen sind. Außerdem kann ein ungewolltes Anhaften durch elektrostatische Kräfte des Förderguts innerhalb des Fördergutbehälters vermieden werden. Dadurch kann der Fördergutbehälter leichter be- und entladen werden. Unter einem Oberflächenwiderstand kann ein in einem bestimmten Abstand zwischen zwei punktförmigen Elektroden messbarer elektrischer Widerstand verstanden werden. Unter einem spezifischen Oberflächenwiderstand kann ein zwischen zwei parallel gegenüberliegend angeordneten, länglichen Elektroden gemessener Widerstand verstanden werden, wobei eine Länge der Elektroden einem Abstand der Elektroden zueinander entspricht. Konkret kann der spezifische Oberflächenwiderstand 2x10⁷ Ohm/Square betragen. Um eine elektrostatische Aufladung zuverlässig zu vermieden, wird ein Material verwendet, welches antistatisch ist. Besonderes bevorzugt kann in diesem Fall der spezifische Oberflächenwiderstand zwischen 10⁹ Ohm/Square und 10¹² Ohm/Square betragen.

Dazu ist es auch denkbar, dass das biegeschlaffe Material elektrisch leitende Fasern und/oder elektrisch leitende Drähte aufweist. Über die elektrisch leitenden Fasern und/oder Drähte kann zum Verhindern der elektrostatischen Aufladung elektrische Energie abfließen. Dazu können die Fasern und/oder Drähte mit einer Erdung verbunden sein.

Bevorzugt können die elektrisch leitenden Fasern und/oder Drähte in einem Abstand zwischen 1 mm und 15 mm, bevorzugt etwa 8 mm, in das biegeschlaffe Material eingebracht sein. Bei einem größeren Abstand werden vergleichsweise wenig Drähte und/oder Fasern benötigt. Für die speziellen Aufgaben des Fördergutbehälters hat sich herausgestellt, dass ein Abstand zwischen 1 und 15 mm noch eine ausreichend gute Abführung der Ladung zum Verhindern der elektrostatischen Aufladung gewährleistet. Ein Abstand von etwa 8 mm hat sich als guter Kompromiss zwischen Materialeinsparung und Verhindern der elektrostatischen Aufladung herausgestellt.

Besonderes bevorzugt können die elektrisch leitenden Fasern ein Kohlefasermaterial aufweisen. Das Kohlefasermaterial kann in das biegeschlaffe Material eingewoben werden und/oder auf einer Oberfläche angebracht sein. Etwaige biegeschlaffe Eigenschaften werden durch das Kohlefasermaterial nicht oder nur unwesentlich beeinträchtigt, wobei gleichzeitig eine Stabilität erhöht und die elektrische Leitfähigkeit bereitgestellt werden kann.

Die Aufgabe ist darüber hinaus durch ein Verfahren zum Entladen eines Förderguts aus einem Fördergutbehälter gelöst, bei dem der Fördergutbehälter auf einer Hängefördervorrichtung zu einer Entladestation in eine Bereitstellungsposition transportiert und an der Entladestation in einem ersten Schritt durch eine Öffnungsvorrichtung oder von einer Bedienperson aus einer Schließstellung, in welcher das Fördergut im Aufbewahrungsraum verstaut ist, in eine Öffnungsstellung, in welcher das Fördergut im Aufbewahrungsraum zugänglich ist, verstellt wird, und anschließend in einem zweiten Schritt durch eine Entladevorrichtung der Boden aus einer Transportstellung, in der das Fördergut im Aufbewahrungsraum gelagert ist, in eine Auswerfstellung, in der das Fördergut aus dem Aufbewahrungsraum auswerfbar ist, geneigt wird, sodass in der Auswerfstellung ein der Belade- und/oder Entladeöffnung gegenüberliegender hinterer Bodenbereich höher liegt als ein vorderer Bodenbereich und das Fördergut aus dem Fördergutbehälter rutscht. Das Fördergut kann also abgesehen von einer auf dieses wirkenden Hangabtriebskraft ohne zusätzliche Krafteinwirkung und damit berührungsfrei aus dem Aufbewahrungsraum des Fördergutbehälters ausgeworfen werden. Ein etwaiges manuelles und/oder mechanisiertes Hineingreifen in den Aufbewahrungsraum ist nicht erforderlich. Ein etwaiges Durchgreifen durch zwei gegenüberliegende offene Seiten, beispielsweise mittels einer Schubeinrichtung ist ebenfalls nicht erforderlich.

Die Aufgabe ist zusätzlich durch ein Verfahren zum manuellen oder automatischen Beladen eines oben beschriebenen Fördergutbehälters gelöst, bei dem der Fördergutbehälter auf einer Hängefördervorrichtung zu einer Beladestation transportiert und in einer Bereitstellungsposition vor einer Beladevorrichtung oder einer Beschickungsvorrichtung bereitgestellt wird, wobei in einem ersten Schritt der Fördergutbehälter durch eine Öffnungsvorrichtung oder von einer Bedienperson aus einer Schließstellung, in welcher der Aufbewahrungsraum unzugänglich und/oder volumenminimiert ist, in eine Öffnungsstellung, in welcher der Aufbewahrungsraum zugänglich ist, verstellt wird, und anschließend in einem zweiten Schritt das Fördergut von der Beladevorrichtung oder der Beschickungsvorrichtung in den Aufbewahrungsraum des in die Öffnungsstellung verstellten Fördergutbehälters verbracht wird, wobei eine Arbeitsebene an der Beladevorrichtung oder der Beschickungsvorrichtung im Wesentlichen mit dem Boden des Fördergutbehälters fluchtet oder geringfügig oberhalb des Bodens des Fördergutbehälters verläuft, sodass ein im Wesentlichen stufenloser Übergang zwischen der Arbeitsebene und dem Boden ausgebildet ist. Der Begriff "im Wesentlicher stufenloser Übergang" ist dabei so zu verstehen, dass zwischen der Arbeitsebene und dem Boden zwar ein begrenzter Stufensprung möglich ist, dieser dann jedoch so niedrig ist, dass auch ein kleines Fördergut nicht in freiem Fall auf den Boden abgeworfen wird. Das Fördergut kann vielmehr von der Arbeitsebene auf den Boden gekippt werden. Bei der Arbeitsebene kann es sich um eine Tischoberfläche oder eine gedachte mittels einer Mechanisierung wie eines Roboters ausgebildete Ebene handeln. Im Falle eines manuellen Beladens mithilfe eines Tisches kann das Fördergut in einer Gleitbewegung entlang der Arbeitsebene in den Fördergutbehälter hineingeschoben werden. Dies ist auch mechanisiert mittels des Roboters möglich. Nach dieser Ausführung wird das Fördergut nicht "abgeworfen" sondern schonend abgelegt. Nach einer anderen Ausführung kann ein Pusher und ein Auflagetisch verwendet werden, wobei das Fördergut auf der Arbeitsebene aufliegt und mechanisiert durch die Beladeöffnung hindurch in den Aufbewahrungsraum des Fördergutbehälters transportiert wird.

### Kurzbeschreibung der Figuren

Im Folgenden wird die Erfindung anhand von in den Figuren dargestellten Ausführungsbeispielen näher erläutert. Es zeigen:
- Figur 1: eine schematische Rückansicht auf einen Fördergutbehälter in einer ersten Ausführung mit einer Auswerfvorrichtung;
- Figur 2: den in Figur 1 gezeigten Fördergutbehälter in einer dreidimensionalen Ansicht von schräg seitlich hinten;
- Figur 3: eine weitere schematische Rückansicht des in den Figuren 1 und 2 gezeigten Fördergutbehälters, jedoch zusammen mit einem schematisch eingezeichneten Fördergut und in einer Auswerfstellung der Auswerfvorrichtung;
- Figur 4: eine Vorderansicht eines zweiten Ausführungsbeispiels eines Fördergutbehälters mit einer Umlenkung zur Betätigung der Auswerfvorrichtung;
- Figur 5: den in Figur 4 gezeigten Fördergutbehälter, jedoch in der Auswerfstellung der Auswerfvorrichtung;
- Figur 6: eine Ansicht eines mit einer Mitnehmermechanik zusammenwirkenden Fördergutbehälters, entgegen einer Fahrtrichtung gesehen;
- Figur 7: eine Ansicht des in Figur 6 gezeigten Fördergutbehälters zusammen mit der Mitnehmermechanik quer zur Fahrtrichtung;
- Figur 8: eine dreidimensionale Ansicht auf einen Fördergutbehälter in einer dritten Ausführung, von seitlich oben in eine Be- und Entladeöffnung hinein;
- Figur 9: die in Figur 8 gezeigte Ansicht des Fördergutbehälters, jedoch im Unterschied beladen mit einem Fördergut;
- Figur 10: eine Seitenansicht des in den Figuren 8 und 9 gezeigten Fördergutbehälters ohne Fördergut und in einer Schließstellung;
- Figuren 11 und 12: die in Figur 10 gezeigte Ansicht des Fördergutbehälters, jedoch mit einem kleinen und einem größeren verstauten Fördergut;
- Figur 13: die in den Figuren 11 und 12 gezeigte Ansicht des Fördergutbehälters, jedoch ohne Fördergut und in einer Öffnungsstellung;
- Figur 14: eine dreidimensionale Ansicht von schräg seitlich vorne oben des in den Figuren 8 bis 13 gezeigten Fördergutbehälters in einer Beladestation;
- Figuren 15 bis 17: jeweils eine dreidimensionale Ansicht von schräg seitlich hinten oben eines weiteren Fördergutbehälters in einer weiteren Beladestation zum Verdeutlichen unterschiedlicher Phasen eines Beladens des Fördergutbehälters mit einem Fördergut;
- Figuren 18 bis 20: den in den Figuren 15 bis 17 gezeigten Fördergutbehälter, jedoch im Unterschied in einer Entladestation zur Verdeutlichung eines Entladevorgangs;
- Figur 21: ein in den Figuren 18 bis 20 gezeigtes Detail des Fördergutbehälters in einer Seitenansicht, wobei der Fördergutbehälter geschlossen ist;
- Figur 22: das in Figur 21 gezeigt Detail, wobei der Fördergutbehälter mittels einer Taschenöffnungsklappe von einer in Figur 21 gezeigten Schließstellung in eine Öffnungsstellung gebracht ist; und
- Figur 23: eine weitere Beladestation analog der in den Figuren 15 bis 17 gezeigten Beladestation, die im Unterschied eine stationäre Wand zum Verhindern eines versehentlichen Durchladens aufweist.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

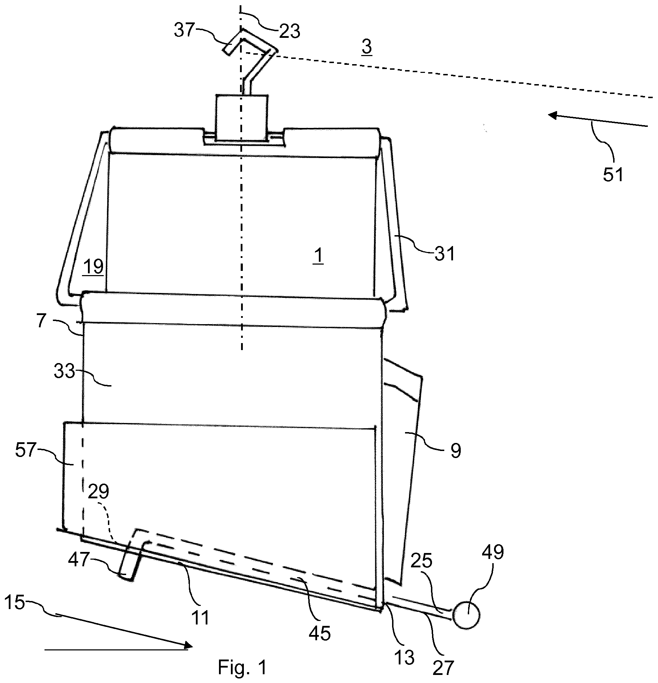

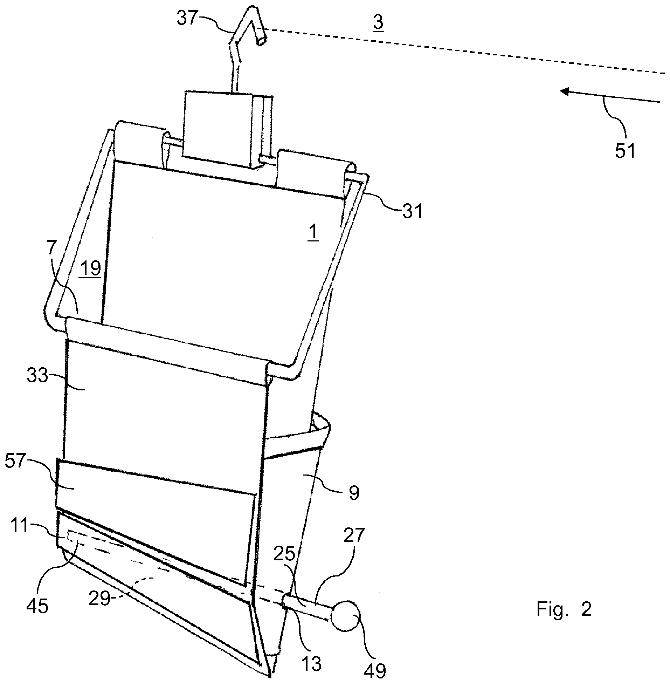

Die Figuren 1 bis 3 zeigen ein Ausführungsbeispiel eines Fördergutbehälters 1 für eine Hängefördervorrichtung 3, wobei die Figuren 2 und 3 eine Auswerfvorrichtung 13 des Fördergutbehälters 1 in unterschiedlichen Stellungen, nämlich einer Transportstellung in Figur 2 und einer Auswerfstellung in Figur 3 zeigen. Im Folgenden wird auf die Figuren 1 bis 3 gleichermaßen Bezug genommen, es sei denn es ist explizit Gegenteiliges erwähnt.

Der Fördergutbehälter 1 kann in die lediglich mittels des Bezugszeichens 3 angedeutete Hängefördervorrichtung eingehängt werden und mittels dieser transportiert bzw. gefördert werden. Dazu weist der Fördergutbehälter 1 einen Haken 37 auf, der in eine entsprechende Aufnahme der nicht vollständig dargestellten Hängefördervorrichtung 3 einhängbar ist.

Wie in Figur 3 schematisch angedeutet, kann innerhalb des Fördergutbehälters 1 ein Fördergut 5 aufgenommen bzw. transportiert werden.

Der Fördergutbehälter 1 weist eine geöffnete vertikale Seite 7 auf, durch die hindurch das Fördergut 5 in der in Figur 3 gezeigten Auswerfstellung ausgeworfen werden kann.

Das Beladen des Fördergutbehälters 1 kann durch einen Rahmen 31 hindurch erfolgen, der eine geöffnete Oberseite 19 des Fördergutbehälters 1 aufspannt. Grundsätzlich ist ein Beladen aber auch über die geöffnete vertikale Seite 7 möglich. Das Beladen des Fördergutbehälters 1 mit dem Fördergut 5 ist mittels eines geschwungenen Pfeiles 39 in Figur 3 angedeutet. Das Entladen bzw. eine Entladerichtung ist in Figur 3 mittels eines Pfeiles 41 angedeutet. Die Entladerichtung gemäß des Pfeiles 41 verläuft entlang eines Auswerfgefälles 17, das mittels der Auswerfvorrichtung 13 herstellbar ist. Zum Herstellen des Auswerfgefälles17 kann ein Auslösehebel 25 der Auswerfvorrichtung 13 betätigt werden. Genauer kann er in Richtung eines Pfeils 43 vertikal nach oben betätigt werden. Der Auslösehebel 25 ist mit einem Boden 11 des Fördergutbehälters 1 verbunden und insbesondere in einen Stoffkanal 45 des Bodens 11 eingenäht. Um den Auslösehebel 25 gegen ein Herausziehen aus dem Stoffkanal 45 zu sichern, kann dieser ein gekröpftes Ende 47 aufweisen.

Wie in den Figuren 1 und 2 zu erkennen, weist der Fördergutbehälter 1 neben der geöffneten vertikalen Seite 7 drei geschlossene vertikale Seiten 9 auf. An diesen kann das Fördergut 5 während des Förderns und in der in den Figuren 1 und 2 gezeigten Transportstellung der Auswerfvorrichtung 13 angelegt werden.

Wie in Figur 1 eingezeichnet, weist der Boden 11 in der Transportstellung ein Lagergefälle 15 auf, das dem Auswerfgefälle 17 entgegen gerichtet geneigt ist. Dadurch kann das Fördergut 5 auf die der geöffneten vertikalen Seite 7 gegenüberliegende, geschlossene vertikale Seite 9 zu rutschen und an diese angelegt werden. Dadurch kann ein versehentliches Herausfallen des Förderguts 5 während des Transports aus dem Fördergutbehälter 1 sicher vermieden werden.

Wie in Figur 3 zu erkennen, kann die Hängefördervorrichtung 3 eine Mitnehmermechanik 21 aufweisen. Die Mietnehmermechanik 21 weist insbesondere eine Kulissenführung auf, die mit einem Führungsknauf 49 an einem Ende eines Überstandes 27 des Auslösehebels 25 zusammenwirken kann. Mittels der Mitnehmermechanik 21 kann während einer Vorbeifahrt entlang einer Fahrtrichtung 51 des Fördergutbehälters 1 der Führungsknauf 49 vertikal in Richtung des Pfeiles 43 angehoben und wieder abgesenkt werden. Dadurch kann der Auslösehebel 25 mechanisiert und ohne zusätzliche Stellantriebe zum Verstellen des Lagergefälles 15 in das Auswerfgefälle 17 und wieder zurück verschwenkt werden.

Bei einem bevorzugten Ausführungsbeispiel ist der Fördergutbehälter 1 in einem eingehängten Zustand an der Hängefördervorrichtung 3 um eine in den Figuren 1 und 3 beispielhaft angezeichnete Hochachse 23 verschwenkbar. Dadurch kann die geöffnete vertikale Seite 7, die in Figur 3 beispielhaft nach links zeigt, also in die Fahrtrichtung 51 auch in einem beliebigen Winkel zur Fahrtrichtung 51 oder entgegen dieser eingestellt werden. Dadurch kann das Fördergut 5, falls gewünscht, seitlich, z.B. in einem Winkel von ungefähr 90 Grad zur Fahrtrichtung 51 aus dem Fördergutbehälter 1 ausgeworfen werden, insbesondere auf seitlich der Hängefördervorrichtung 3 angebrachte Rutschen.

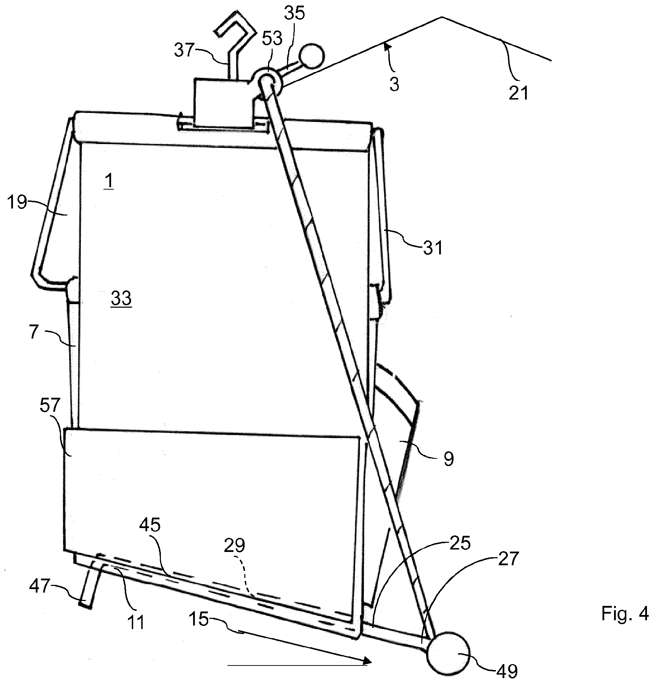

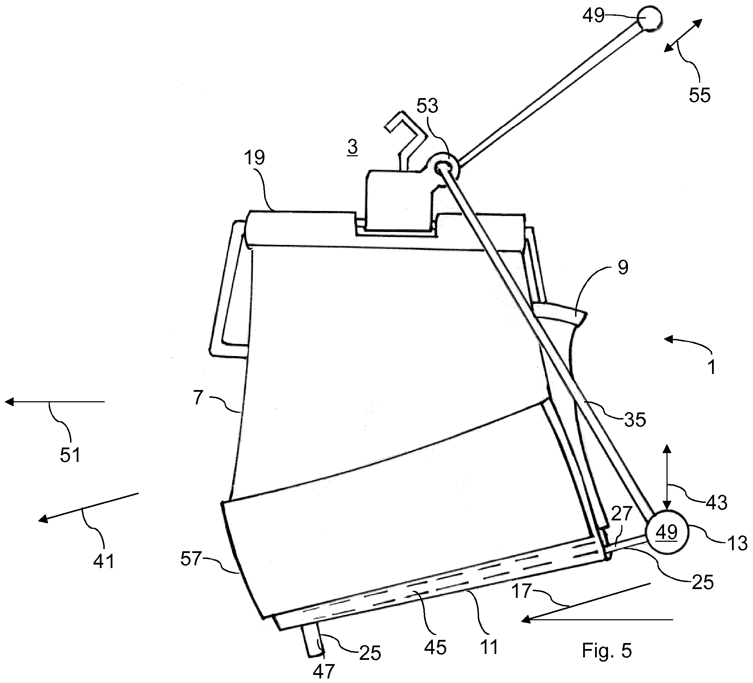

Die Figuren 4 und 5 zeigen eine Vorderansicht eines weiteren Ausführungsbeispiels eines Fördergutbehälters 1, wobei Figur 4 diesen in der Transportstellung und Figur 5 in der Auswerfstellung zeigt. Im Unterschied zu der Darstellung der Figuren 1 bis 3 weist der Fördergutbehälter 1 bzw. die Auswerfvorrichtung 13 des Fördergutbehälters 1 zusätzlich eine Umlenkung 35 auf. Die Umlenkung 35 ist an dem dem gekröpften Ende 47 gegenüberliegenden Ende des Auslösehebels 25 angebracht und führt über eine eine Betätigungskraft umlenkende Öse 53 nach oben in die Nähe des Hakens 37 des Fördergutbehälters 1. Mittels der Umlenkung 35 kann die Auswerfvorrichtung 13 in einem räumlichen Abstand zu derselben, insbesondere zu dem Auslösehebel 25 betätigt werden. Insbesondere weist die Umlenkung 35 einen Seilzug auf der durch ein Ziehen in Richtung eines Pfeiles 55 ein Anheben bzw. durch ein wieder loslassen ein Absenken des Auslösehebels 25 bewirkt. Durch die Umlenkung 35 kann die Auswerfvorrichtung 13 besonders einfach bedient werden.

Wie in den Figuren 3 und 5 ersichtlich, weist der Fördergutbehälter 1 insbesondere ein biegeschlaffes Material 33 auf, das das Anheben des Bodens 11 ermöglicht. Insbesondere ist es denkbar, dass für eine Versteifung des biegeschlaffen Materials 33 dieses innenliegend oder außenliegend eine Beplankung 57 aufweist. Insbesondere kann der Boden 11 eine solche Beplankung 57 aufweisen, um ein sicheres Lagern des Förderguts 5 innerhalb des Fördergutbehälters 1 zu ermöglichen. Ferner ist es denkbar, dass der Boden 11 und/oder die Beplankung 57 eine Gleitfläche 29 aufweisen, entlang der das Fördergut 5 entsprechend des Lagergefälles 15 oder des Auswerfgefälles 17 gleitend lagerbar ist. Vorzugsweise kann die Gleitfläche 29 ein reibminderndes Material, insbesondere PTFE (Polytetrafluorethylen) und/oder ähnliches aufweisen.

Aufgrund der mechanisierten Betätigung der Auswerfvorrichtung können besonders kurze Beladezyklen erreicht werden, insbesondere 3.000 bis 4.500 Beladungen und entsprechend Entladungen bzw. Entnahmen. Vorteilhaft kann der Fördergutbehälter 1 voll automatisiert befüllt und entleert werden. Außerdem muss der Fördergutbehälter 1 während des Entladens des Förderguts 5 nicht in Einzelteile zerlegt werden. Vielmehr kann dieser unmittelbar nach dem Entladen wieder weiterverwendet, also beladen werden. Dadurch kann ebenfalls ein besonders kurzer Arbeitstakt erzielt werden. Vorteilhaft kann der Fördergutbehälter 1 durch seinen einfachen Aufbau aus wenigen Teilen besonders kostengünstig hergestellt werden. Außerdem können bereits bestehende Fördergutbehälter mit einer in den Figuren 1 bis 5 gezeigten Auswerfvorrichtung nachgerüstet werden. Dazu kann auf einfache Art und Weise der Auslösehebel 25 am Boden 11 angebracht, insbesondere angenäht werden.

Vorteilhaft ist der Fördergutbehälter 1 dreiseitig geschlossen und weist den neigbaren Boden 11 auf. Dadurch sind ein gegen Herausfallen gesichertes Fördern des Förderguts 5 und ein einfaches Entladen gewährleistet. Durch den in den Stoffkanal 45 eingenähten Auslösehebel 25 kann eine in den Figuren 1, 2 und 4 rechts dargestellte tiefe Seite des Bodens 11, betrachtet in einem aufgehängten Zustand des Fördergutbehälters 1, angehoben werden, wodurch das Auswerfgefälle 17 hergestellt wird. Das Handling kann entweder manuell oder bevorzugt mittels der Mitnehmermechanik 21, insbesondere einer Metallkufe und/oder einer Kulissenführung geschehen, an der der Fördergutbehälter 1 vorbeifährt. Alternativ kann dies von oben geschehen, wie in den Figuren 4 und 5 dargestellt, also mittels der Umlenkung 35. Vorteilhaft geschieht dies durch reine fahrkinematische Energie des Fördergutbehälters 1 während der Vorbeifahrt, sodass keine zusätzlichen Betätigungselemente und/oder Stellmotoren und/oder ein Unterbrechen der Fahrt entlang der Fahrtrichtung des Fördergutbehälters 1 erforderlich sind. Es ist also keine sogenannte zerstückelte Fahrt erforderlich, die gegebenenfalls mit mechanischem, prozessualem und/oder sensorischem Aufwand verbunden wäre.

Der Fördergutbehälter 1 und/oder die Hängevorrichtung 3 können so eingerichtet sein, dass die Drehung um die Hochachse 23 möglich ist, sodass das Fördergut 5 auch nach rechts oder links auf abgehende Rutschen ausgeworfen werden kann.

Die Figuren 6 und 7 zeigen ein weiteres Ausführungsbeispiel eines mit einer Mitnehmermechanik 21 zusammenwirkenden Fördergutbehälters 1. In Figur 6 bewegt sich der Fördergutbehälter 1 entlang eines Förderpfads 63 in die Bildebene hinein und in der Perspektive der Figur 7 parallel zu der Bildebene von links nach rechts. Die Mitnehmermechanik 21, der Fördergutbehälter 1 und eine in Figur 7 nur schematisch angedeutete Hängefördervorrichtung 3 sind Teil einer Förderanordnung 61. Im Folgenden wird auf die vorhergehenden Figuren ebenfalls Bezug genommen und lediglich auf die Unterschiede eingegangen.

Im Unterschied zum ersten Ausführungsbeispiel wird der Fördergutbehälter 1 durch einen bei einer Vorbeifahrt herstellbaren Anlagekontakt mit der als aufstellbarer Tisch ausgeführten Mitnehmermechanik 21 entleert. Die Mitnehmermechanik kann auch als schiefe Ebene ausgebildet sein und/oder fest installiert werden. Die Aufstellung und Positionierung der Mitnehmermechanik 21 kann also unabhängig von einer Schiene der Hängefördervorrichtung 3, auf der der Haken 37 förderbar ist, aufgestellt werden. Die Mitnehmermechanik 21 kann entlang des Förderpfads frei positioniert beziehungsweise aufgestellt werden. Die Aufstellung erfolgt dabei so, dass bei einer Vorbeifahrt gezielt eine Kollision des Fördergutbehälters 1 mit einer geneigten Fläche 59 der Mitnehmermechanik 21 erzeugbar ist. Dadurch ist der Boden 11 direkt von seiner Transportstellung in die in Figur 6 gezeigte Auswerfstellung verlagerbar.

Um eine gezielte Verlagerung durch den Anlagekontakt, insbesondere ein Entlangschleifen an der Mitnehmermechanik 21 zu unterstützen, kann der Boden 11 einen Drahtrahmen aufweisen, insbesondere durch diesen aufgespannt sein. Alternativ oder ergänzend kann der Boden 11 auch eine versteifende Platte aufweisen. Bei einer Weiterfahrt erfolgt beim Verlassen der Mitnehmermechanik 21 eine Rückverlagerung in die Transportstellung. Dazu ist die Fläche 59 in Fahrtrichtung 51 gesehen ansteigend und wieder abfallend ausgeführt. Insbesondere ist die Fläche 59 zusätzlich seitlich zur Fahrtrichtung 51 geneigt, insbesondere mit dem Auswerfgefälle 17, das in der Ausrichtung der Figur 6 gesehen von rechts oben nach links unten abfällt. Die Mitnehmermechanik 21 ist also an einer Seite, an der das Auswerfen erfolgt, niedriger als an einer dieser gegenüberliegenden Seite. Dadurch kann ein relativ zur Fahrtrichtung 51 gesehen seitliches Auswerfen des Förderguts 5 erfolgen. Alternativ kann das Fördergut 1 in oder gegen die Fahrtrichtung 51 ausgeworfen werden.

Um den oben beschriebenen Effekt zur Verlagerung des Bodens 11 durch einen direkten Anlagekontakt mit der Mitnehmermechanik 21 zu erzielen, kann diese in dem Förderpfad 63 angeordnet werden, insbesondere so, dass die Fläche 59 mit dem Boden 11 kollidiert, um diesen zu verlagern. Es kann einfach eine Nachrüstung erfolgen.

Wie in Figur 7 zu erkennen, die den Fördergutbehälter 1 zum Betrachter hin mit der vertikalen geöffneten Seite 7 zeigt, kann die Fläche 59 einen gekrümmten Verlauf aufweisen, vorzugsweise einen parabelförmig gekrümmten Verlauf, insbesondere einen in Fahrtrichtung 51 parabelförmig nach oben gekrümmten und vorzugswiese quer zur Fahrtrichtung sowie zur vertikalen geöffneten Seite 7 hin abfallenden. Zur Justierung der Verlagerung des Bodens 11, kann die Mitnehmermechanik 21 eine insbesondere hydraulisch betätigbare Höhenverstellung aufweist. Vorzugsweise kann auch die Neigung der Fläche 59, insbesondere quer zur Fahrtrichtung 51, mittels der Höhenverstellung beeinflusst werden. Wie in Figur 6 erkennbar, ist das Material 33 zumindest bereichsweise biegeschlaff, sodass eine präzise Verlagerung des Bodens 11 erfolgen kann, wobei sich der Fördergutbehälter 1 vor, während und nach dem Anlagekontakt mit der Mitnehmermechanik 21 gut aushängt. Dadurch kann großes und kleines Fördergut 5 kontrollierbar und sicher ausgeworfen werden.

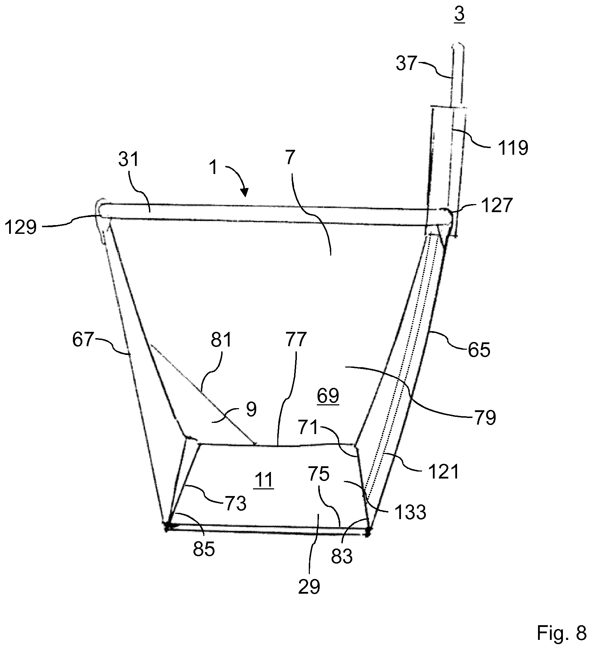

Figur 8 zeigt eine dreidimensionale Seitenansicht von schräg seitlich oben eines weiteren Fördergutbehälters 1. Zu erkennen ist der Blick durch eine Belade- und/oder Entladeöffnung 79 hindurch in einen Aufbewahrungsraum 69 des Fördergutbehälters 1. Der Aufbewahrungsraum 69 verbleibt zwischen dem Boden 11, einer Vorderwand 65, einer Rückwand 67 und einem der Belade- und/oder Entladeöffnung 79 gegenüberliegend angeordneten Seitenwandanschlag 81.

Der Seitenwandanschlag 81 dient als Arretierung für das in dem Aufbewahrungsraum 69 transportierbare Fördergut 5. Der Seitenwandanschlag 81 ist vorliegend dreieckig ausgebildet und schließt sich an einer zweiten Stirnkante 77 des Bodens 11 an und erstreckt sich von dort verjüngend vertikal nach oben. Der Seitenwandanschlag 81 ist also an den Boden 11 und an die Rückwand 67 angebracht. Alternativ ist es auch denkbar, den Seitenwandanschlag 81 an den Boden 11 und die Vorderwand 65 anzubringen und/oder an beide Wände 65 und 67 und/oder diesen vollflächig zwischen dem Rahmen 31, dem Boden 11, der Vorderwand 65 und der Rückwand 67 auszuführen. Der Rahmen 31 ist bevorzugt rechteckförmig gestaltet.

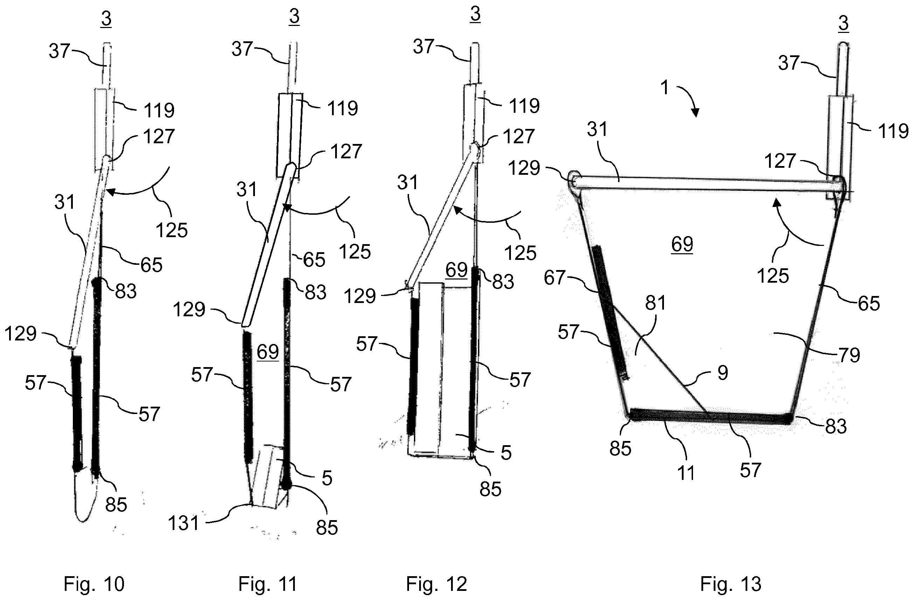

Der Boden 11 geht an einer ersten Längskante 71 in die Vorderwand 65 über. Entsprechend geht der Boden 11 an einer zweiten Längskante 73 in die Rückwand 67 über. Vorzugsweise sind die erste Längskante 71 als erste Faltkante 83 und die zweite Längskante 73 als zweite Faltkante 85 ausgebildet. An den Faltkanten 83 und 85 können die Vorderwand 65, Rückwand 67 und der Boden 11 gegeneinander gefaltet bzw. verschwenkt werden. Der Rahmen 31 ist entlang eines Schwenklagers 127 relativ zu einem Hängeträger 119 verschwenkbar. Gegenüberliegend des Schwenklagers 127 weist der Rahmen 31 ein weiteres Schwenklager 129 auf, das hier eine durch Umklappen gebildete Schlaufe beziehungsweise einen Stoffkanal zur gelenkigen Aufnahme eines Schenkels des Rahmens 31 aufweist. Mittels des Weiteren Schwenklagers 129 kann die Rückwand 67 relativ zu dem Rahmen 31 verschwenkt werden. Es ist ersichtlich, dass mittels des Schwenklagers 127, des Weiteren Schwenklagers 129 sowie der ersten Faltkante 83 und der zweiten Faltkante 85 ein Viergelenk gebildet wird, mittels dem der in Figur 8 gezeigte Fördergutbehälter 1 zwischen einer in Figur 8 gezeigten Öffnungsstellung und einer beispielsweise in Figur 10 gezeigten Schließstellung verstellt werden kann bzw. verstellbar ist.

Gegenüberliegend der zweiten Stirnkante 77 weist der Boden 11 des Fördergutbehälters 1 eine erste Stirnkante 75 auf. An der ersten Stirnkante 75 schließt sich an den Boden 11 die Belade- und/oder Entladeöffnung 79 an. Seitlich ist die Belade- und/oder Entladeöffnung 79 durch die Vorderwand 65 und Rückwand 67 begrenzt.

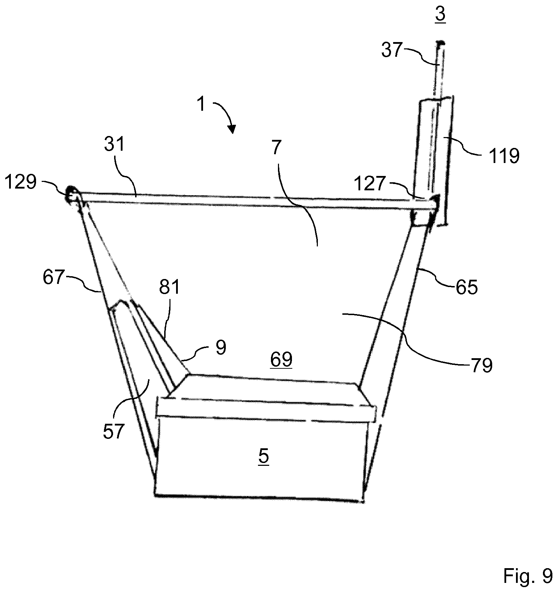

Figur 9 zeigt den in Figur 8 gezeigten Fördergutbehälter 1, jedoch beladen mit einem Fördergut 5. In Figur 9 ist der Fördergutbehälter 1 ebenfalls in der Öffnungsstellung gezeigt, wobei das Fördergut 5 durch die Belade- und/oder Entladeöffnung 79 zugänglich ist. Außerdem ist in Figur 9 eine Beplankung 57 zu erkennen, die in diesem Ausführungsbeispiel zur Versteifung der Rückwand 67 dient. Der Boden 11 kann ebenfalls eine Beplankung 57 aufweisen, auf der das Fördergut 5 ohne wesentliche Verformung des Bodens 11 aufgestellt werden kann, wie in Fig. 9 eingetragen.

Figur 10 zeigt den in den Figuren 8 und 9 gezeigten Fördergutbehälter 1 in einer Seitenansicht und in der Schließstellung. Es ist zu erkennen, dass dazu der Rahmen 31 mittels des Schwenklagers 127 verschwenkt ist, vorliegend heruntergeklappt wurde. Dadurch kann der Fördergutbehälter 1 entlang der Faltkanten 83 und 85 zusammengefaltet werden, wobei ein Volumen des Aufbewahrungsraums 69 auf ein Minimum verkleinert ist, vorzugsweise auf ein Volumen von Null verkleinert ist.

Figur 11 zeigt die in Figur 10 gezeigte Ansicht des Fördergutbehälters 1, ebenfalls in der Schließstellung, jedoch beladen mit einem vergleichsweise kleinen Fördergut 5. Es ist zu erkennen, dass aufgrund des Volumens des Förderguts 5 der Aufbewahrungsraum 9 in der Schließstellung nur teilweise verkleinert ist. Genauer weist der Aufbewahrungsraum 69 in der Schließstellung ein an das Fördergut 5 angepasstes Volumen auf, wobei aufgrund eines Gewichts des Förderguts 5 sowie der Beplankungen 57 und/oder des Rahmens 31 das Fördergut 5 in dem Aufbewahrungsraum 69 gehalten, eingeklemmt und/oder kraftschlüssig fixiert ist. Alternativ oder zusätzlich kann sich dabei das biegeschlaffe Material 33 verformen und/oder an eine Kontur des Förderguts 5 anpassen und einen Formschluss 131 zwischen dem biegeschlaffen Material 33 und dem Fördergut 5 bewirken. Dadurch kann das Fördergut 5 besonders gut im Aufbewahrungsraum 69 gehalten werden.

Figur 12 zeigt die in den Figuren 10 und 11 gezeigte Ansicht des Fördergutbehälters 1, jedoch beladen mit einem größeren Fördergut 5. Figur 12 zeigt den Fördergutbehälter 1 ebenfalls in seiner Schließstellung, wobei aufgrund des größeren Volumens des Föderguts 5 der Aufbewahrungsraum 69 entsprechend vergrößert wird und dadurch an das Volumen des Förderguts 5 angepasst ist.

Figur 13 zeigt die in den Figuren 10 bis 12 gezeigte Ansicht des Fördergutbehälters 1, jedoch im Unterschied in der Öffnungsstellung. Wie in den Figuren 10 bis 13 anhand eines geschwungenen Pfeils 125 angedeutet, wird dazu der Rahmen 31 von einer in Figur 10 gezeigten herunterhängenden Lage in eine ungefähr waagrechte Position verschwenkt. Es ist zu erkennen, dass dadurch der Aufbewahrungsraum 69 auf ein maximales Volumen vergrößert ist. In der Öffnungsstellung kann auf einfache Art und Weise ein Be- und Entladen des Fördergutbehälters 1 erfolgen.

Wie in Figur 13 zu erkennen, weist der Fördergutbehälter in seiner Öffnungsstellung vorzugweise einen trapezförmigen Längsschnitt auf, wobei der Boden 11 parallel zu dem Rahmen 31 angeordnet ist. Vorzugsweise ist der Längsschnitt des Fördergutbehälters 1 in der Öffnungsstellung gleichschenklig trapezförmig. Alternativ ist es jedoch auch denkbar, dass der Längsschnitt in der Öffnungsstellung ein allgemeines Viereck, ein Rechteck oder ein Quadrat bildet. Als besonders vorteilhaft hat sich eine in Figur 13 gleichschenklig trapezförmige Auslegung erwiesen, wobei sich der Aufbewahrungsraum 69 nach oben in Richtung des Rahmens 31 aufweitet. Bei einer solchen Ausgestaltung kann auf besonders einfache Art und Weise das Be- und Entladen erfolgen, wobei die Vorderwand 65 und die Rückwand 67 vergleichsweise wenig stören. Außerdem ist es bei dieser Ausgestaltung besonders einfach möglich, den Fördergutbehälter 1 alternativ von oben durch den Rahmen 31 hindurch zu beladen.

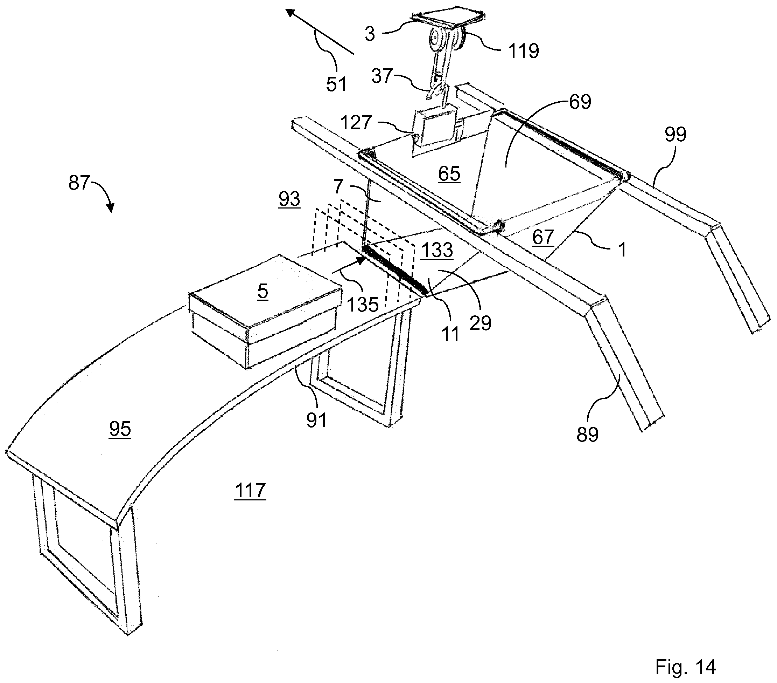

Figur 14 zeigt den in den Figuren 8 bis 13 gezeigten Fördergutbehälter 1 von schräg hinten seitlich oben in einer Beladestation 87.

In der Beladestation 87 weist der Fördergutbehälter 1 die Öffnungsstellung auf. Diese kann beispielsweise mittels einer Öffnungsvorrichtung 89 der Beladestation 87 bewirkt werden.

Vorliegend ist die Öffnungsvorrichtung 89 Teil eines Führungsprofils 99, das mit dem Rahmen 31 zusammenwirkt. Genauer fährt der Rahmen 31 bei einer Einfahrt (von rechts nach links - wie mit dem Pfeil 51 angedeutet) in die Beladestation 87 auf einen schräg gekröpften Teil des Führungsprofils 99 an und dann derart verschwenkt, dass der Fördergutbehälter 1 von der in Figur 10 gezeigten Schließstellung in die in Figur 13 gezeigte Öffnungsstellung um das Schwenklager 127 verstellt wird.

Die Beladestation 87 weist nach einer ersten Ausführung ausschließlich eine Beladevorrichtung 91 auf, die vorliegend als Tisch ausgebildet ist. Der Tisch der Beladevorrichtung 91 weist eine Oberfläche auf, die eine Arbeitsebene 95 bildet.

Gemäß einer zweiten Ausgestaltung kann die Beladestation 87 die Beladevorrichtung 91 und eine lediglich mittels gestrichelten Linien und des Bezugszeichens 93 angedeutete Beschickungsvorrichtung 93 aufweisen. Die Beschickungsvorrichtung 93 kann beispielsweise einen Pusher aufweisen, der das Fördergut 5 in den Aufbewahrungsraum 69 des Fördergutbehälters 1 verlagert. Die Beladevorrichtung 91 ist wiederum als Tisch ausgebildet, welcher an einer Oberfläche die Arbeitsebene 95 ausbildet.

Nach einer dritten Ausgestaltung kann die Beladestation 87 eine Beschickungsvorrichtung 93 aufweisen, welche beispielsweise eine motorisierte Fördertechnik, wie einen Gurtförderer umfasst, die das Fördergut 5 in den Aufbewahrungsraum 69 des Fördergutbehälters 1 fördert. Die Beschickungsvorrichtung 93 bildet durch ihre Förderebene die Arbeitsebene 95 aus.

Nach einer (nicht näher dargestellten) vierten Ausgestaltung, kann die Beladestation 87 anstatt der Beladevorrichtung 91 eine Beschickungsvorrichtung 93 aufweisen. Die Beschickungsvorrichtung 93 kann beispielsweise einen Roboter aufweisen, der das Fördergut 5 in den Aufbewahrungsraum 69 des Fördergutbehälters 1 verlagert. In diesem Fall kann der Tisch entfallen, wobei die Arbeitsebene 95 als gedachte Arbeitsebene ausgebildet ist, beispielsweise definiert von einer Bewegungstrajektorie des nicht näher dargestellten Roboters zum Bewegen des Förderguts 5 in den Aufbewahrungsraum 69.

Nach allen Ausführungen ist die Arbeitsebene 95 vorzugsweise fluchtend besonders bevorzugt leicht oberhalb einer Gleitfläche 29 des Bodens 11 angeordnet. Gemäß der ersten und zweiten Ausführung kann zum Beladen des Fördergutbehälters 1 das Fördergut 5 auf der Arbeitsebene 95 und der Gleitfläche 29 des Bodens 11 entlang gleiten, was in Figur 14 mittels eines ersten Pfeils 135 symbolisiert ist.

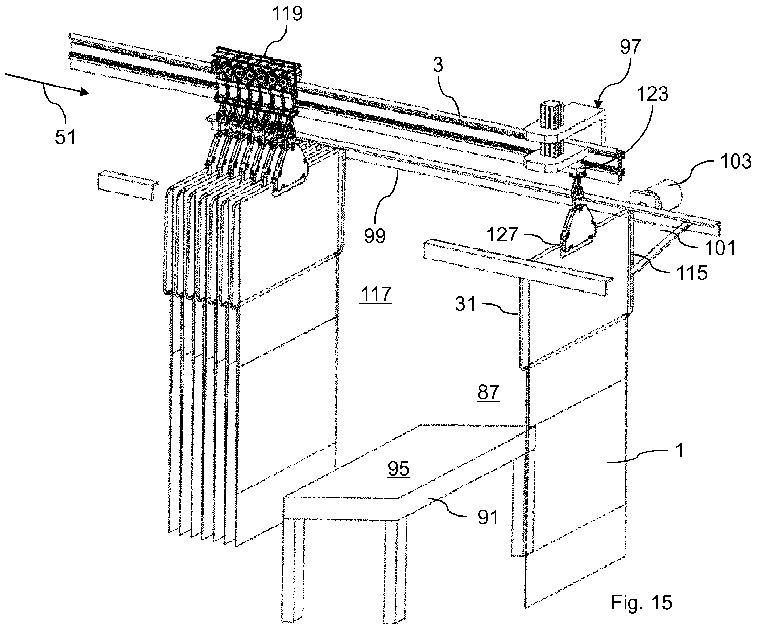

Die Figuren 15 bis 17 zeigen ein weiteres Ausführungsbeispiel eines Fördergutbehälters 1 in einer Beladestation 87. Dargestellt sind unterschiedliche Phasen des Beladens des Fördergutbehälters 1 mit dem Fördergut 5. Im Folgenden wird auf die Figuren 15 bis 17 gleichermaßen Bezug genommen, es sei denn es ist explizit gegenteiliges erwähnt.

Die Beladestation 87 und der Fördergutbehälter 1 sind Teil eines nur teilweise dargestellten Hängefördersystems 117. Das Hängefördersystem 117 weist die Hängefördervorrichtung 3 auf. Die Hängefördervorrichtung 3 kann beispielsweise ein grundsätzlich bekanntes und daher nicht im Detail erläutertes Fördermedium aufweisen, beispielsweise ein entlang einer Förderschiene endlos umlaufendes Band. Mittels der Hängefördervorrichtung 3 können die Hängeträger 119 und über diese die Fördergutbehälter 1 gefördert werden. Gegebenenfalls kann dies entlang der Beladestation 87 mittels des Führungsprofils 99 geführt erfolgen. Wie in den Figuren 15 bis 17 zu erkennen, kann das Führungsprofil 99 einseitig oder gegebenenfalls beidseitig zur Führung des Rahmens 31 vorgesehen sein. Zur besseren Veranschaulichung ist eine Seite des Führungsprofils 99 in den Figuren 15 bis 17 lediglich teilweise dargestellt. Die Führungsprofile 99 können sich entlang der gesamten Hängefördervorrichtung 3 oder optional zum Einsparen von Material auch nur entlang der Beladestation 87 erstrecken.

Die Figuren 15 bis 17 zeigen einen der Fördergutbehälter 1 relativ zu der Beladestation 87 bzw. der Hängefördervorrichtung 3 in einer Bereitstellungsposition (Beladeposition). Die Bereitstellungsposition kann mittels einer Feststellvorrichtung 97 herbeigeführt bzw. gehalten werden. Mittels der Feststellvorrichtung 97 kann dazu der Fördergutbehälter 1 relativ zu der Hängefördervorrichtung 3 festgesetzt bzw. gebremst werden, sodass dieser während des Beladevorgangs in der Bereitstellungsposition verbleibt.

Wie in den Figuren 15 bis 17 außerdem zu erkennen, werden mit dem Hängefördersystem 117 mittels der Hängefördervorrichtung 3 eine Vielzahl der Fördergutbehälter 1transportiert. Beispielhaft sind vor einer Einfahrt in die Beladestation 87 in einem Puffer sieben weitere, leere und sich jeweils in der Schließstellung befindliche Fördergutbehälter 1 eingezeichnet. Sobald der vorangegangene Fördergutbehälter 1 beladen ist, rückt ein nächster Fördergutbehälter 1 nach und kann mit einem weiteren Fördergut 5 beladen werden.

Wie in Figur 15 zu erkennen, befindet sich vor dem Beladen der Fördergutbehälter 1 in der Schließstellung. Dabei ist der Rahmen 31 heruntergeklappt, befindet sich also ungefähr in einer vertikalen Ausrichtung.

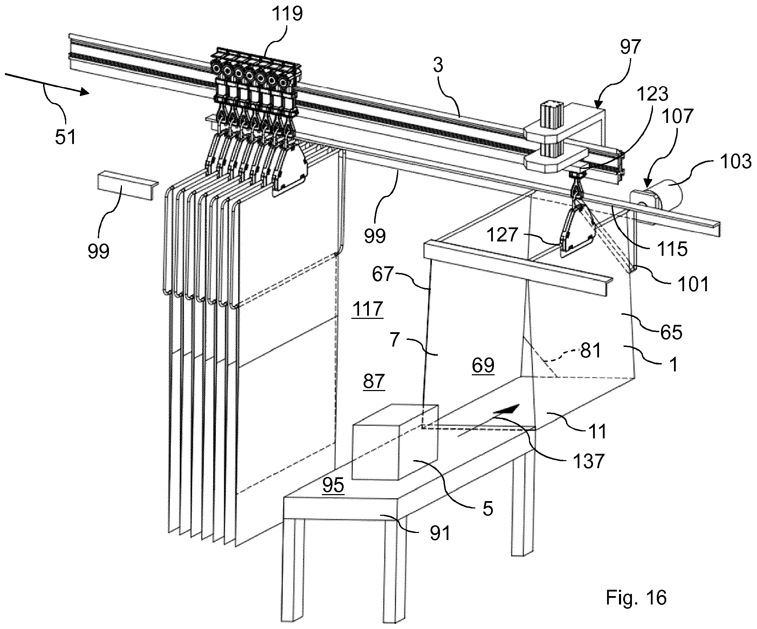

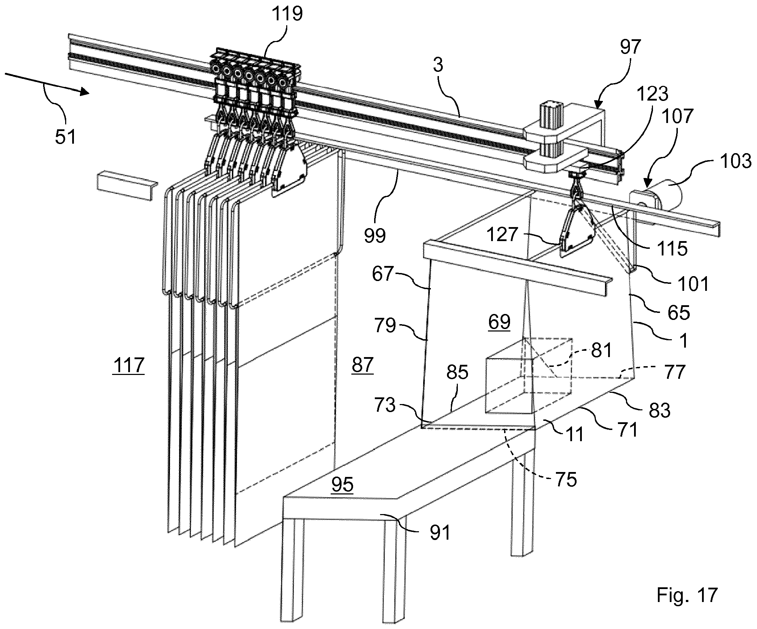

Wie in Figur 16 zu erkennen, ist der Fördergutbehälter 1 bereits in seine Öffnungsstellung verschwenkt. Dazu wird ausgehend von einer in Figur 15 gezeigten Position eine Taschenöffnungsklappe 101 um einen Winkel in eine in Figur 16 gezeigte weitere Position verschwenkt. Das Betätigen bzw. Verschwenken der Taschenöffnungsklappe 101 zwischen einer ersten Klappenstellung und einer zweiten Klappenstellung erfolgt mittels eines Antriebs 103. In der ersten Klappenstellung (Fig. 15) befindet sich der Fördergutbehälter 1 in der Schließstellung. In der zweiten Klappenstellung (Fig. 16, 17) befindet sich der Fördergutbehälter 1 in der Öffnungsstellung. Bei dem Antrieb 103 kann es sich um einen Schrittmotor und/oder einen beliebigen anderen mechanischen Antrieb handeln. Der Antrieb 103 und die Taschenöffnungsklappe 101 sind Teil einer Öffnungsvorrichtung 107 zum Verstellen des Fördergutbehälters 1 von seiner Schließstellung, die in Figur 15 gezeigt ist, in seine Öffnungsstellung, die in Figur 16 gezeigt ist. Die Öffnungsvorrichtung 107 umfasst eine Betätigungsvorrichtung zum Öffnen des Fördergutbehälters 1, in dem eine Betätigungsvorrichtung den Rahmen 31 des Fördergutbehälters 1 zwischen einer Ausgangsstellung und einer Auslenkstellung bewegt. In der Ausgangsstellung ist der Rahmen 31 je nach Beladung ungefähr vertikal bis schräg und in der Auslenkstellung ungefähr horizontal angeordnet.

Nach gezeigter Ausführung umfasst die Betätigungsvorrichtung eine über den Antrieb 103 zwischen einer in Figur 15 gezeigten ersten Stellung und einer in den Figuren 16 und 17 gezeigten zweiten Stellung verstellbare Taschenöffnungsklappe 101.

Die Taschenöffnungsklappe 101 weist einen Führungssteg 115 auf. Dieser befindet sich in der Darstellung der Figur 15, also in der Schließstellung des Fördergutbehälters 1, vor dem heruntergeklappten Rahmen 31. In der Darstellung gemäß Figur 16 und 17, also in der Öffnungsstellung des Fördergutbehälters 1, liegt der Rahmen 31 zwischen dem Führungssteg 115 und dem Führungsprofil 99. Je nach Antriebsmoment des Antriebs 103 ist es möglich, dass dadurch der Rahmen 31 kraftschlüssig zwischen dem Führungssteg 115 der Taschenöffnungsklappe 101 und dem Führungsprofil 99 fixiert ist. Wie in den Figuren 16 und 17 gezeigt, liegt also in der Öffnungsstellung des Fördergutbehälters 1 der Führungssteg 115 an dem Rahmen 31 an und hält diesen in einer im Wesentlichen waagrechten Position.

In Figur 15 befindet sich der Fördergutbehälter 1 noch in der Schließstellung. In Figur 16 befindet sich der Fördergutbehälter 1 durch ein Verschwenken des Rahmens 31 in eine horizontale Position in seiner Öffnungsstellung, wobei in Figur 16 ein Fördergut 5 zum Laden bereit steht. Dieses wird entlang eines zweiten Pfeils 137 in den Aufbewahrungsraum 69 hineingeschoben. Der Boden 11 bildet dabei eine in die Belade- und/oder Entladeöffnung 79 mündende Aufnahmefläche 133 aus, auf welcher das Fördergut 5 - wie in Figur 17 dargestellt - bis zum Zurückverstellen des Fördergutbehälters 1 von der in den Figuren 16 und 17 gezeigten Öffnungsstellung in seine Schließstellung lagern kann, und welche insbesondere die Gleitfläche 29 definiert. Im Vergleich zu den Figuren 10 bis 12 ist zu erkennen, dass der Boden 11 nur in der Öffnungsstellung die im Wesentlichen horizontale Aufnahmefläche 133 ausbildet. In der in den Figuren 10 bis 12 gezeigten Schließstellung hängt der Boden 11 vertikal herab und kann dabei eine vertikale Anlagefläche ausbilden, an der gegebenenfalls das Fördergut 5 während des Transports anlegbar ist.

Figur 17 zeigt entsprechend den Fördergutbehälter 1 in der Beladestation 87 mit dem aufgenommenen Fördergut 5. In Figur 17 befindet sich also das Fördergut 5 bereits in dem Fördergutbehälter 1, wobei dieser sich noch in der Öffnungsstellung befindet. Durch ein Zurückverschwenken der Taschenöffnungsklappe 101 von der in den Figuren 16 und 17 gezeigten Betätigungsposition in die in Figur 15 gezeigte Ruheposition kann der Fördergutbehälter 1 von der Öffnungsstellung in die Schließstellung gebracht werden, wobei dabei das Fördergut 5 in dem Aufbewahrungsraum 65 eingeklemmt wird, wie beispielsweise auch in den Figuren 11 und 12 dargestellt.

Zum Beladen eines Fördergutbehälters 1 mit einem Fördergut, werden Fördergutbehälter 1 auf der Hängefördervorrichtung 3 zur Beladestation 87 transportiert und nacheinander in der Bereitstellungsposition vor der Beladevorrichtung 91 oder der Beschickungsvorrichtung 93 bereitgestellt.

Der zu beladende Fördergutbehälter 1 kann an einer Bereitstellungsposition angehalten und gegebenenfalls dort mit der Feststellvorrichtung 97 lagefixiert werden. Der Fördergutbehälter 1 ist noch in der Schließstellung.

In einem ersten Schritt wird der Fördergutbehälter 1 durch die Öffnungsvorrichtung 107 aus der Schließstellung, in welcher der Aufbewahrungsraum 69 unzugänglich und/oder volumenminimiert ist, in die Öffnungsstellung, in welcher der Aufbewahrungsraum 69 zugänglich ist, verstellt. Dies erfolgt nach diesem Ausführungsbeispiel durch Betätigen der Taschenöffnungsklappe 101 von der ersten Klappenstellung in die zweite Klappenstellung. In der zweiten Klappenstellung befindet sich der Rahmen 31 in der Auslenkstellung und wird in der Öffnungsstellung des Fördergutbehälters 1 von der Taschenöffnungsklappe 101 in der Auslenkstellung gehalten. Außerdem kann der Rahmen 31 in der Auslenkstellung gegen das Führungsprofil 99 anliegen, womit eine Stabilisierung des geöffneten Fördergutbehälters 1 erreicht wird und der Beladevorgang besonders zuverlässig erfolgen kann.

Anschließend wird in einem zweiten Schritt ein oder mehrere Fördergüter 5 von der Beladevorrichtung 91 oder der Beschickungsvorrichtung 93 in den Aufbewahrungsraum 69 des in die Öffnungsstellung verstellten Fördergutbehälters 1 verbracht. Die Arbeitsebene 95 an der Beladevorrichtung 91 oder der Beschickungsvorrichtung 93 fluchtet im Wesentlichen mit dem Boden 11 des Fördergutbehälters 1 oder verläuft geringfügig oberhalb des Bodens 11 des Fördergutbehälters 1.

Nach dem Beladen des Fördergutbehälters 1 mit zumindest einem Fördergut 5 wird, sofern eine Feststellvorrichtung 97 vorhanden ist, der Fördergutbehälter 1 freigegeben und mit einer Antriebskraft beaufschlagt und der Rahmen 31 gleitet entlang des (immer noch in die zweite Klappenstellung verstellten) Führungssteges 115. Der Rahmen 31 verlässt infolge der Förderbewegung den Führungssteg 115 und der Rahmen 31 schwenkt selbststätig nach unten, sodass der beladene Fördergutbehälter 1 geschlossen wird - der Fördergutbehälter 1 ist in der Schließstellung und hält das Fördergut zwischen der Vorderwand 65, der Rückwand 67 und Boden 11.

Nach dem Verlassen des Fördergutbehälters 1 aus der Beladestation 87 wird die Taschenöffnungsklappe 101 von der zweiten Klappenstellung in die erste Klappenstellung verstellt. Die Taschenöffnungsklappe 101 ist wieder in Bereitschaft für den nächsten Fördergutbehälter 1.

Alternativ kann das Verstellen des Fördergutbehälter 1 aus der Schließstellung, in welcher der Aufbewahrungsraum 69 unzugänglich und/oder volumenminimiert ist, in die Öffnungsstellung, in welcher der Aufbewahrungsraum 69 zugänglich ist, durch eine an der Beladestation 87 arbeitende Bedienperson (nicht dargestellt) erfolgen. Dabei wird ebenso der Rahmen 31 verstellt, insbesondere verschwenkt. Eine separate Öffnungsvorrichtung 107 kann also entfallen.

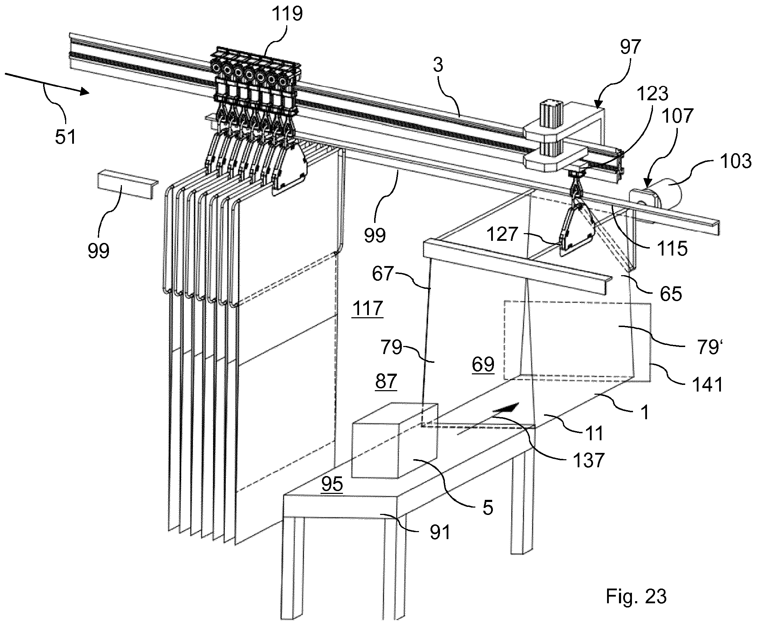

Figur 23 zeigt eine weitere Beladestation 87 analog der in den Figuren 15 bis 17 gezeigten Beladestation 87, die im Unterschied eine stationäre Wand 141 zum Verhindern eines versehentlichen Durchladens aufweist. Im Folgenden werden die Unterschiede näher erläutert und im Übrigen wird auf die Figuren 15 bis 17 verwiesen.

Figur 23 zeigt den Fördergutbehälter 1 in der Beladestation 87 in der Öffnungsstellung und damit bereit beladen zu werden, wobei das Fördergut 5 wie auch in der Darstellung der Figur 16 noch nicht in den Aufbewahrungsraum 69 eingebracht ist. Der Fördergutbehälter 1 befindet sich also in der Bereitstellungsposition. Es ist zu erkennen, dass die Beladestation 87 gegenüberliegend der Belade- und/oder Entladeöffnung 79 eine stationäre Wand 141 aufweist, falls sich der Fördergutbehälter 1 in der dargestellten Bereitstellungsposition befindet.

An diese stationäre Wand 141 der Beladestation 87 kann das Fördergut 5 bei einem Beladevorgang entlang der Richtung des zweiten Pfeils 137 anschlagen. Dadurch kann ein versehentliches Durchladen, bei dem das Fördergut 5 wieder aus dem Fördergutbehälter 1 hinausfallen würde, sicher verhindert werden.

Figur 23 zeigt außerdem einen Fördergutbehälter 1, welcher im Unterschied zu den vorigen Figuren ohne den Seitenwandanschlag 81 ausgebildet ist. Ein solcher Fördergutbehälter 1 kann besonders gut in Kombination mit der Beladestation 87 gemäß Figur 23 verwendet werden.

Der Fördergutbehälter 1 weist in dieser Ausführung eine durch die Vorderwand 65 und Rückwand 67 begrenzte und an die zweite Stirnkante 77 angrenzende Öffnung auf, welche insbesondere eine Belade- und/oder Entladeöffnung 79' ausbildet. So ist es möglich, dass an einer ersten Seite des Fördergutbehälters 1 die Beladeöffnung 79 und an einer zweiten Seite des Fördergutbehälters 1 die Entladeöffnung 79' oder umgekehrt ausgebildet sind.

Im Rahmen der Erfindung ist es aber auch möglich, dass die Beladestation 87 nach den vorherigen Ausführungen mit einer stationäre Wand ausgestattet und der Fördergutbehälter 1 mit dem Seitenwandanschlag 81 ausgebildet ist. Ebenso kann die nachfolgende Entladestation 105 gegenüberliegend der Belade- und/oder Entladeöffnung 79 eine stationäre Wand (nicht dargestellt) aufweisen, gegen welche das zu entladende Fördergut 5 anlegbar ist. Dadurch kann das Fördergut 5 gegebenenfalls relativ zum Boden 11 ausgerichtet werden.

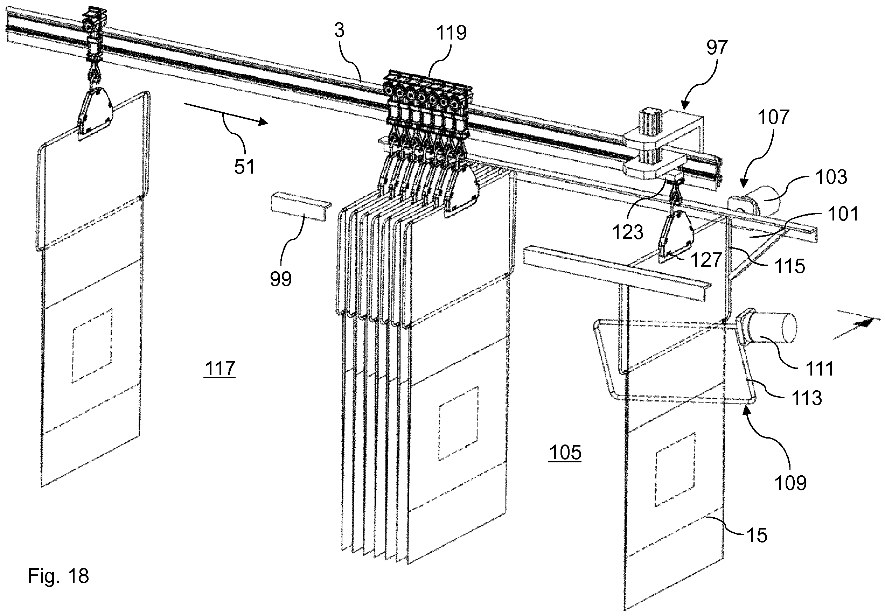

Die Figuren 18 bis 20 zeigen den Fördergutbehälter 1 in einer Entladestation 105 des Hängefördersystems 117. Die Figuren 18 bis 20 verdeutlichen einen Entladevorgang des Fördergutbehälters 1 in unterschiedlichen Phasen. Im Folgenden wird auf die Figuren 18 bis 20 gemeinsam Bezug genommen, es sei denn es ist explizit Gegenteiliges erwähnt.

Die Entladestation 105 zum Entladen eines mit zumindest einem Fördergut 5 beladenen Fördergutbehälters 1, umfasst eine Hängefördervorrichtung 3 zum Antransport des Fördergutbehälters 1 in die Entladestation 105 und Abtransport des Fördergutbehälters 1 aus der Entladestation 105, eine Öffnungsvorrichtung 107 (Auswerfmechanik) zum Verstellen des Fördergutbehälters 1 zwischen einer Schließstellung, in welcher das Fördergut 5 im Aufbewahrungsraum 69 verstaut oder verstaubar ist, und einer Öffnungsstellung, in welcher das Fördergut 5 im Aufbewahrungsraum 69 zugänglich ist, und eine Entladevorrichtung 109 zum Entladen des in die Öffnungsstellung verstellten Fördergutbehälters 1. Es wird auf die Beschreibung der Figuren 15 bis 17 verwiesen. Außerdem weist die Entladestation 105 analog der Darstellungen 15 bis 17 eine Feststellvorrichtung 97 zum Feststellen des Hängeträgers 119 auf. Die Feststellvorrichtung 97 weist eine an den Hängeträger 119 anlegbare Fixierplatte 123 auf, mittels der der Hängeträger 119 form- und/oder kraftschlüssig an der Hängefördervorrichtung 3 fixierbar ist. Die Fixierplatte 123 kann mittels eines nicht näher dargestellten Antriebs und/oder Betätigungsvorrichtung verlagert bzw. entsprechend an den Hängeträger 119 angelegt werden.

Die Hängefördervorrichtung 3 kann beispielsweise ein grundsätzlich bekanntes und daher nicht im Detail erläutertes Fördermedium aufweisen, beispielsweise ein entlang einer Förderschiene endlos umlaufendes Band. Mittels der Hängefördervorrichtung 3 können die Hängeträger 119 und über diese die Fördergutbehälter 1 gefördert werden. Gegebenenfalls kann dies entlang der Entladestation 105 mittels des Führungsprofils 99 geführt erfolgen. Wie in den Figuren 18 bis 20 zu erkennen, kann das Führungsprofil 99 einseitig oder gegebenenfalls beidseitig zur Führung des Rahmens 31 vorgesehen sein. Zur besseren Veranschaulichung ist eine Seite des Führungsprofils 99 in den Figuren 18 bis 20 lediglich teilweise dargestellt. Die Führungsprofile 99 können sich entlang der gesamten Hängefördervorrichtung 3 oder optional zum Einsparen von Material auch nur entlang der Entladestation 105 erstrecken.

Die Öffnungsvorrichtung 107 umfasst eine Betätigungsvorrichtung zum Öffnen des Fördergutbehälters 1, in dem eine Betätigungsvorrichtung den Rahmen 31 des Fördergutbehälters 1 zwischen einer Ausgangsstellung und einer Auslenkstellung bewegt. In der Ausgangsstellung ist der Rahmen 31 je nach Beladung ungefähr vertikal bis schräg und in der Auslenkstellung ungefähr horizontal angeordnet.

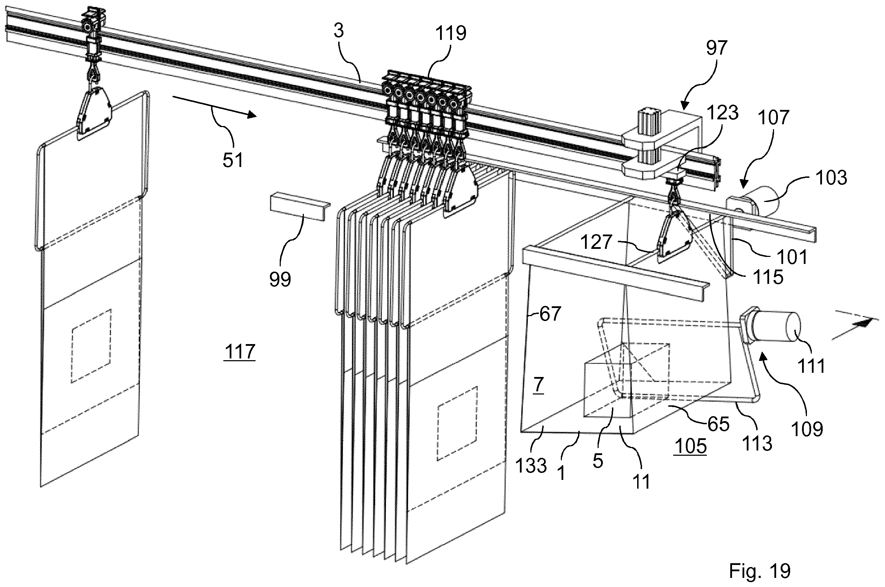

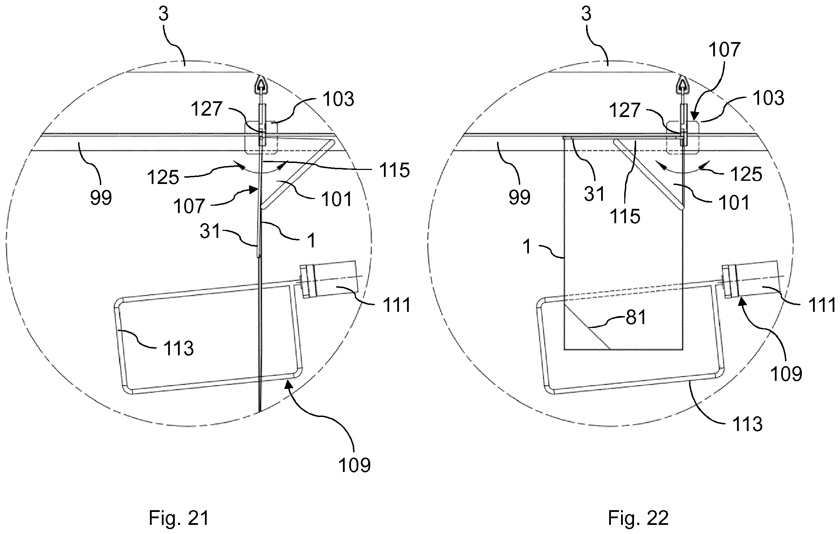

Nach gezeigter Ausführung umfasst die Betätigungsvorrichtung eine über den Antrieb 103 zwischen einer in den Figur 18, 21 gezeigten ersten Stellung und einer in den Figuren 19, 20 und 22 gezeigten zweiten Stellung verstellbare Taschenöffnungsklappe 101. In der ersten Klappenstellung befindet sich der Fördergutbehälter 1 in der Schließstellung. In der zweiten Klappenstellung befindet sich der Fördergutbehälter 1 in der Öffnungsstellung. Befindet sich der Fördergutbehälter 1 in der Bereitstellungsposition, also optional arretiert und zum Entladen positioniert in der Entladestation 105, ist der Rahmen 31 in der Ausgangsstellung und die Taschenöffnungsklappe 101 ist in der ersten Stellung, in welcher der Rahmen 31 gegen einen Führungssteg 115 der Taschenöffnungsklappe 101 anliegt.

Figur 18 zeigt den Fördergutbehälter 1 in einem mit dem Fördergut 5 beladenen Zustand, was in Figur 18 lediglich mittels einer gestrichelten Raute angedeutet ist. Außerdem sind weitere gepufferte Fördergutbehälter 1 sowie ein herannahender, in den Puffer einfahrender Fördergutbehälter 1 in den Figuren 18 bis 20 dargestellt.

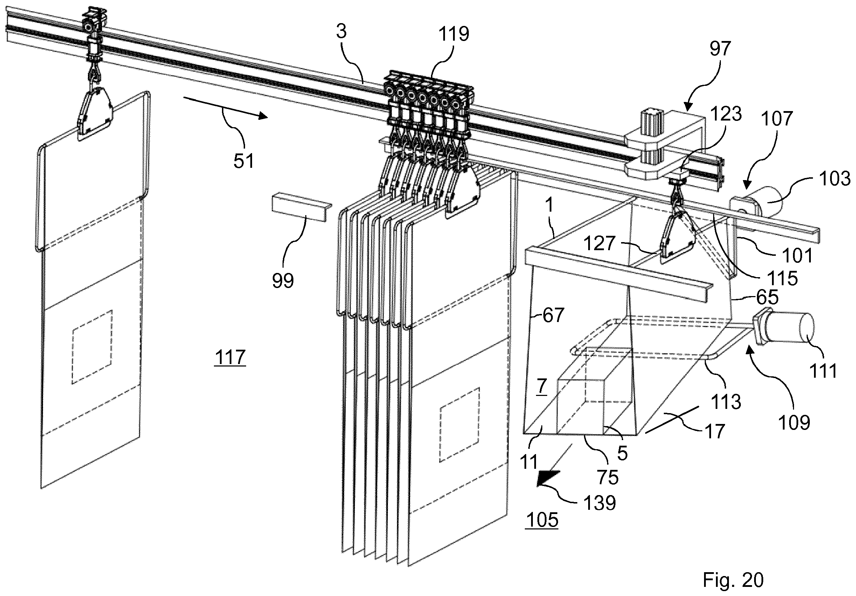

Figur 19 zeigt den in der Entladestation 105 fixierten Fördergutbehälter 1, welcher mittels der Taschenöffnungsklappe 101 der Öffnungsvorrichtung 107 bereits in die Öffnungsstellung gebracht wurde. Es ist zu erkennen, dass dadurch das Fördergut 5 durch die Belade- und/oder Entladeöffnung 79 zugänglich ist. Um ein Hineingreifen in den Aufbewahrungsraum 69 vermeidbar zu machen, weist die in den Figuren 18 bis 20 dargestellte Entladestation 105 eine Entladevorrichtung 109 auf. Die Entladevorrichtung 109 weist eine mittels eines Entladeantriebs 111 zwischen einer Ausgangsstellung (Fig. 18, 19, 21, 22) und einer Betätigungsstellung (Fig. 20) betätigbare Taschenentladungsvorrichtung 113 auf. Vorliegend ist die Taschenentladungsvorrichtung 113 als mittels des Entladeantriebs 111 verschwenkbarer Bügel ausgestaltet.

Wie in den Figuren 18 bis 20 ersichtlich, ist die Taschenentladevorrichtung 113, insbesondere der Bügel, auf einer der Belade- und/oder Entladeöffnung 79 gegenüberliegenden Seite des Fördergutbehälters 1 angeordnet und derart positioniert, dass durch Verschwenken der Taschenentladevorrichtung 113, insbesondere des Bügels, der Boden 11 einseitig angehoben werden kann. Durch das Verschwenken des Bügels der Taschenentladungsvorrichtung 113 wird der Boden 11 des Fördergutbehälters 1 einseitig untergriffen. Der Boden 11 kann also einseitig angehoben werden. Durch das einseitige Anheben gegenüberliegend der Belade- und/oder Entladeöffnung 79 liegt die der Belade- und/oder Entladeöffnung 79 gegenüberliegende zweite Stirnkante 77 höher als die erste Stirnkante 75, die an die Beladeund/oder Entladeöffnung 79 angrenzt. Dadurch wird das in Figur 20 eingezeichnete Auswerfgefälle 17 des Bodens 11 hergestellt, sodass das Fördergut 5 in Richtung eines Pfeiles 139 selbsttätig aus dem Fördergutbehälter 1 heraus gleitet. Die Gleitbewegung findet über den Boden 11 bzw. die Gleitfläche 29 des Bodens 11 statt. Im Vergleich dazu kann der Boden 11 in den Figuren 18 und 19 das Lagergefälle 15 in Richtung des Seitenwandanschlags 81 ausbilden.

In den Figuren 18 bis 20 ist auch zu erkennen, dass die Fördergutbehälter 1 auf der Hängefördervorrichtung 3 nacheinander und vereinzelt zu der Entladestation 105 angefördert werden. Die Fördergutbehälter 1 können vor der Entladestation 105 in der Puffervorrichtung aufgestaut werden, wie in der Figuren 18 bis 20 gezeigt. Danach werden die Fördergutbehälter 1 wiederum vereinzelt zur Entladestation 105 und dort in eine Bereitstellungsposition (Entladeposition) gefördert. Die Vereinzelung der Fördergutbehälter 1 erfolgt durch die Puffervorrichtung. Ein solche Puffervorrichtung ist aus dem Stand der Technik bekannt und wird deshalb nicht näher beschrieben.

Die Figuren 21 und 22 zeigen eine Detailansicht der in den Figuren 18 bis 20 gezeigten Öffnungsvorrichtung 107 und Entladevorrichtung 109. Im Folgenden wird das Zusammenwirken der Öffnungsvorrichtung 107 und der Entladevorrichtung 109 zum Entladen des Fördergutbehälters 1 näher erläutert. Zunächst fährt der Fördergutbehälter 1 in die Entladestation 105 ein und wird in der Entladeposition mittels der Feststellvorrichtung 97 fixiert. Die Entladeposition des Fördergutbehälters 1 ist in den Figuren 21 und 22 gezeigt. In Figur 21 befindet sich der Fördergutbehälter 1 noch in seiner Schließstellung und ist mit einem nicht dargestellten Fördergut 5 beladen. Durch ein Verschwenken der Taschenöffnungsklappe 101 wird die in Figur 22 gezeigte Öffnungsstellung des Fördergutbehälters 1 bewirkt. Dabei ist der Aufbewahrungsraum 69 und das in diesem vorhandene, aber nicht dargestellte Fördergut 5 zugänglich. Nach einem Betätigen der Taschenöffnungsklappe 101 erfolgt eine Betätigung der Taschenentladungsvorrichtung 113. Wie in den Figuren 21 und 22 deutlich zu erkennen, kann eine radial außerhalb einer durch den Entladeantrieb 111 definierten Schwenkachse liegende Stange des Bügels der Taschenentladevorrichtung 113 den Boden 11 einseitig untergreifen. Zum Anheben des Bodens 11 schlägt dieser von unten an den Boden 11 an und hebt diesen soweit an bis das gewünschte Auswerfgefälle 17 hergestellt ist. Diese Position ist in Figur 20 gezeigt.

Zum Entladen werden beladene Fördergutbehälter 1 auf der Hängefördervorrichtung 3 zur Entladestation 105 transportiert und nacheinander in der Bereitstellungsposition vor der Entladevorrichtung 109 bereitgestellt. Der zu entladende Fördergutbehälter 1 kann an der Bereitstellungsposition (Entladeposition) angehalten und gegebenenfalls dort mit der Feststellvorrichtung 97 lagefixiert werden. Der beladene Fördergutbehälter 1 ist noch in der Schließstellung (Fig. 18, 21).

In einem ersten Schritt wird der bevorzugt angehaltene und optional arretierte Fördergutbehälter 1 durch die Öffnungsvorrichtung 107 aus der Schließstellung, in welcher der Aufbewahrungsraum 69 unzugänglich und/oder volumenminimiert ist, in die Öffnungsstellung, in welcher der Aufbewahrungsraum 69 zugänglich ist, verstellt (Fig. 19, 22). Dies erfolgt nach diesem Ausführungsbeispiel durch Betätigen der Taschenöffnungsklappe 101 von der ersten Klappenstellung in die zweite Klappenstellung. In der zweiten Klappenstellung befindet sich der Rahmen 31 in der Auslenkstellung und wird in der Öffnungsstellung des Fördergutbehälters 1 von der Taschenöffnungsklappe 101 in der Auslenkstellung gehalten. Außerdem kann der Rahmen 31 in der Auslenkstellung gegen das Führungsprofil 99 anliegen, womit eine Stabilisierung des geöffneten Fördergutbehälters 1 erreicht wird und der Beladevorgang besonders zuverlässig erfolgen kann.

Anschließend wird in einem zweiten Schritt der Boden 11 aus einer Transportstellung, in der das Fördergut 5 im Aufbewahrungsraum 69 gelagert ist, in eine Auswerfstellung, in der das Fördergut 5 aus dem Aufbewahrungsraum 69 auswerfbar ist, geneigt (Fig. 20). In der Auswerfstellung liegt ein der Belade- und/oder Entladeöffnung 79 gegenüber liegender hinterer Bodenbereich höher als ein vorderer Bodenbereich und das Fördergut 5 rutscht aus dem Fördergutbehälter 1.

Soll der Fördergutbehälter 1 nach dem Entladen aus der Entladestation 105 gefördert werden, wird der Boden 11 aus der Auswerfstellung in die Transportstellung zurückbewegt. Dies erfolgt nach diesem Ausführungsbeispiel durch Betätigen der Taschenöffnungsklappe 101 aus der zweiten Klappenstellung in die erste Klappenstellung (bei Stillstand des Fördergutbehälters 1). Sofern eine Feststellvorrichtung 97 vorhanden ist, wird der Fördergutbehälter 1 freigegeben und mit Antriebskraft beaufschlagt und der Rahmen 31 gleitet entlang des (immer noch in die zweite Klappenstellung verstellten) Führungssteges 115. Der Rahmen 31 verlässt infolge der Förderbewegung den Führungssteg 115 und der Rahmen 31 wird aus der Auslenkstellung wiederum in die Ausgangsstellung verstellt bzw. schwenkt selbststätig nach unten, sodass der Fördergutbehälter 1 geschlossen wird - der entladene Fördergutbehälter 1 ist in der Schließstellung.

Nach dem Verlassen des Fördergutbehälters 1 aus der Entladestation 105 wird die Taschenöffnungsklappe 101 von der zweiten Klappenstellung in die erste Klappenstellung verstellt. Die Taschenöffnungsklappe 101 ist wieder in Bereitschaft für den nächsten Fördergutbehälter 1.

Alternativ kann das Verstellen des Fördergutbehälter 1 aus der Schließstellung, in welcher der Aufbewahrungsraum 69 unzugänglich und/oder volumenminimiert ist, in die Öffnungsstellung, in welcher der Aufbewahrungsraum 69 zugänglich ist, durch eine an der Entladestation 105 arbeitende Bedienperson (nicht dargestellt) erfolgen. Dabei wird ebenso der Rahmen 31 verstellt, insbesondere verschwenkt. Eine separate Öffnungsvorrichtung 107 kann also entfallen.

Wie in Figur 8 auch zu erkennen, ist es möglich, dass das biegeschlaffe Material 33 des Fördergutbehälters 1 elektrisch leitende Eigenschaften aufweist, insbesondere elektrisch leitende Fasern 121. Diese können in einem Abstand zwischen 1 und 15 mm, bevorzugt ca. 8 mm in das biegeschlaffe Material 33 eingewoben sein. Alternativ oder zusätzlich ist es denkbar, dass das biegeschlaffe Material 33 elektrische Eigenschaften aufweist, beispielsweise einen elektrischen Oberflächenwiderstand (surface resistance) von ≥ 10⁶ Ohm und/oder einem spezifischen Oberflächenwiderstand von 10⁷ Ohm/Square bis 10¹² Ohm/Square, insbesondere von 2x10⁷ Ohm/Square. Dadurch ist es möglich, eine elektrostatische Aufladung des biegeschlaffen Materials 33 zu verhindern, zumindest auf ein Minimum zu reduzieren. Dadurch kann das Be- und Entladen des Fördergutbehälters 1 verbessert werden insbesondere kann ein unerwünschtes Anhaften durch elektrostatische Kräfte des Förderguts 5 verhindert werden. Außerdem können etwaige schädigende Einwirkungen durch elektrostatische Entladungen vermieden werden. Es hat sich gezeigt, dass das angegebene Intervall einen bestmöglichen Kompromiss zwischen einer Verwendung der elektrisch leitenden Fasern 121 und einem guten Schutz des Förderguts 5 gegen ein Anhaften und eventuell schädliche elektrische Entladungen darstellt. Dabei kann mit einem Minimum an Materialeinsatz der elektrisch leitenden Fasern 121 ein bestmögliches Ergebnis erzielt werden.

Abschließend sei auch noch hingewiesen, dass die oben beschriebenen Fördergutbehälter 1 auch als Hängetasche bezeichnet werden können. Der Fördergutbehälter 1 kann ein einziges Fördergut 5 oder mehrere Fördergüter 5 aufnehmen.

Auch sei darauf hingewiesen, dass es sich auch von Vorteil erweisen kann, wenngleich dies nicht zwingend ist, dass die Beladestation 87 und/oder Entladestation 105 die optionale Feststellvorrichtung 97 umfasst, mit welcher der Fördergutbehälter 1 in der Bereitstellungsposition (bzw. Beladeposition und/oder Entladeposition) gehalten wird. Nach gezeigter Ausführung weist die Feststellvorrichtung die über einen nicht näher dargestellten weiteren Antrieb zwischen einer ersten Stellung und einer zweiten Stellung verstellbare Fixierplatte 123 auf, welche mit dem Hängeträger 119 zusammenwirkt. In der ersten Stellung kann der Hängeträger 119 relativ zur Fixierplatte 123 bewegt werden und in der zweiten Stellung wird der Hängeträger 119 fixiert / gehalten.

Auch wenn nach den gezeigten Ausführungen die Öffnungsvorrichtung 107 bzw. die Betätigungsvorrichtung eine einzige Taschenöffnungsklappe 101 zeigt, ist es möglich, dass zusätzlich eine über einen Antrieb zwischen einer ersten Stellung und einer zweiten Stellung verstellbare (nicht näher dargestellte) zweite Taschenöffnungsklappe vorgesehen wird. Die erste Taschenöffnungsklappe und zweite Taschenöffnungsklappe sind zu beiden Seiten des Rahmens 31 angeordnet. Nach einer solchen Ausführung sind die Antriebe 103 synchron angesteuert.

Die Ausführung der mittels dem/der Antrieb/en 103 aktiv angetriebenen Taschenöffnungsklappe(n) 101 hat den Vorteil, dass der Rahmen 31 schonend behandelt wird.

**Bezugszeichenliste**

| | | | |
|---|---|---|---|
| 1 | Fördergutbehälter | 71 | erste Längskante |
| 3 | Hängefördervorrichtung | 73 | zweite Längskante |
| 5 | Fördergut | 75 | erste Stirnkante |
| 7 | geöffnete vertikale Seite | 77 | zweite Stirnkante |
| 9 | geschlossene vertikale Seite | 79 | Belade- und/oder Entladeöffnung |
| 11 | Boden | 81 | Seitenwandanschlag |
| 13 | Auswerfvorrichtung | 83 | erste Faltkante |
| 15 | Lagergefälle | 85 | zweite Faltkante |
| 17 | Auswerfgefälle | 87 | Beladestation |
| 19 | Oberseite | 89 | Öffnungsvorrichtung |
| 21 | Mitnehmermechanik | 91 | Beladevorrichtung |
| 23 | Hochachse | 93 | Beschickungsvorrichtung |
| 25 | Auslösehebel | 95 | Arbeitsebene |
| 27 | Überstand | 97 | Feststellvorrichtung |
| 29 | Gleitfläche | 99 | Führungsprofil |
| 31 | Rahmen | 101 | Taschenöffnungsklappe |
| 33 | Material | 103 | Antrieb |
| 35 | Umlenkung | 105 | Entladestation |
| 37 | Haken | 107 | Öffnungsvorrichtung |
| 39 | Pfeil | 109 | Entladevorrichtung |
| 41 | Pfeil | 111 | Entladeantrieb |
| 43 | Pfeil | 113 | Taschenentladungsvorrichtung |
| 45 | Stoffkanal | 115 | Führungssteg |
| 47 | Ende | 117 | Hängefördersystem |
| 49 | Führungsknauf | 119 | Hängeträger |
| 51 | Fahrtrichtung | 123 | Fixierplatte |
| 53 | Öse | 125 | geschwungener Pfeil |
| 55 | Pfeil | 127 | Schwenklager |
| 57 | Beplankung | 129 | weiters Schwenklager |
| 59 | Fläche | 131 | Formschluss |
| 61 | Förderanordnung | 133 | Aufnahmefläche |
| 63 | Förderpfad | 135 | erster Pfeil |
| 65 | Vorderwand | 137 | zweiter Pfeil |
| 67 | Rückwand | 139 | dritter Pfeil |
| 69 | Aufbewahrungsraum | 141 | stationäre Wand |

## Patentansprüche

1. Beladestation (87) mit einem Fördergutbehälter (1) zum manuellen oder automatischen Beladen des Fördergutbehälters (1) mit einem Fördergut (5), welcher Fördergutbehälter (1) zum Transportieren von Fördergut (5) ausgebildet und zwischen einer Öffnungsstellung und Schließstellung verstellbar ist, umfassend
- eine Vorderwand (65),
- eine Rückwand (67),
- einen an die Vorderwand (65) und Rückwand (67) angrenzenden Boden (11),
- einen Aufbewahrungsraum (69), in dem das Fördergut (5) transportierbar ist, und welcher zwischen der Vorderwand (65), der Rückwand (67) und dem Boden (11) ausgebildet ist, wobei der Aufbewahrungsraum (69) in der Öffnungsstellung zugänglich und in der Schließstellung volumenminimiert ist,
wobei der Boden (11)
- eine erste Längskante (71), an welche die Vorderwand (65) anschließt,
- eine zur ersten Längskante (71) mit einem Abstand verlaufende zweite Längskante (73), an welche die Rückwand (67) anschließt,
- eine zwischen der ersten Längskante (71) und der zweiten Längskante (73) verlaufende erste Stirnkante (75),
- eine zwischen der ersten Längskante (71) und der zweiten Längskante (73) verlaufende zweite Stirnkante (77),
ausbildet,
wobei der Fördergutbehälter (1) in seiner Öffnungsstellung eine durch die Vorderwand (65) und Rückwand (67) begrenzte und an die erste Stirnkante (75) angrenzende Beladeöffnung (79) aufweist,
wobei der Boden (11) eine in die Beladeöffnung (79) mündende Aufnahmefläche (133) ausbildet, auf welcher das Fördergut (5) lagern kann, und welche sich zwischen den beiden Längskanten (71, 73) und den beiden Stirnkanten (75, 77) erstreckt und welche eine Gleitfläche (29) definiert,
welche Beladestation (87) zum manuellen oder automatischen Beladen des Fördergutbehälters (1) ausgebildet ist, umfassend
- eine Hängefördervorrichtung (3) zum Antransport des Fördergutbehälters (1) in die Beladestation (87) und Abtransport des Fördergutbehälters (1) aus der Beladestation (87),
- eine Öffnungsvorrichtung (89, 107) zum Verstellen des Fördergutbehälters (1) zwischen der Schließstellung, in welcher der Aufbewahrungsraum (69) volumenminimiert ist, und der Öffnungsstellung, in welcher der Aufbewahrungsraum (69) zugänglich ist, und
- zum Beladen des in die Öffnungsstellung verstellten Fördergutbehälters (1)
i) entweder eine Beladevorrichtung (91),
ii) oder eine automatisiert betriebene Beschickungsvorrichtung (93),
iii) oder die Beladevorrichtung (91) und die automatisiert betriebene Beschickungsvorrichtung (93) umfasst,
**dadurch gekennzeichnet, dass**
die Vorderwand (65), die Rückwand (67) und der Boden (11) des Fördergutbehälters (1) ein an einem Rahmen (31) aufgehängtes biegeschlaffes Material (33) aufweisen, und
die Beladevorrichtung (91) oder die Beschickungsvorrichtung (93) eine Arbeitsebene (95) definiert, die mit dem Boden (11) des Fördergutbehälters (1) im Wesentlichen fluchtend oder geringfügig oberhalb des Bodens (11) des Fördergutbehälters (1) verläuft, sodass ein im Wesentlichen stufenloser Übergang zwischen der Arbeitsebene (95) und dem Boden (11) ausgebildet ist.

2. Beladestation (87) nach Anspruch 1, **dadurch gekennzeichnet, dass** zusätzlich eine Feststellvorrichtung (97) zum zeitweisen Festsetzen des Fördergutbehälters (1) während eines Beladevorgangs vorgesehen ist.

3. Beladestation nach einem der Ansprüche 1 oder 2, **dadurch gekennzeichnet, dass** zusätzlich ein Führungsprofil (99) zum Führen des Rahmens (31) des Fördergutbehälters (1) vorgesehen ist.

4. Beladestation nach einem der Ansprüche 1 bis 3, **dadurch gekennzeichnet, dass** die Öffnungsvorrichtung (107) der Beladestation (87) zumindest eine mittels eines Antriebs (103) zwischen einer ersten Klappenstellung und einer zweiten Klappenstellung bewegbare Taschenöffnungsklappe (101) zum Verstellen des Fördergutbehälters (1) zwischen der Schließstellung und der Öffnungsstellung aufweist.

5. Beladestation nach Anspruch 4, **dadurch gekennzeichnet, dass** die Taschenöffnungsklappe (101) in der zweiten Klappenstellung eine in Fahrtrichtung des Fördergutbehälters (1) verlaufende Führungsfläche (115) zum Führen des Rahmens (31) bei einem Verlassen der Beladestation (87) aufweist.

6. Beladestation nach Anspruch 4 oder 5, **dadurch gekennzeichnet, dass** der Rahmen (31) in der zweiten Klappenstellung zwischen der Taschenöffnungsklappe (101) und dem Führungsprofil (99) kraftschlüssig fixiert ist.

7. Beladestation nach Anspruch 1, **dadurch gekennzeichnet, dass** der Fördergutbehälter (1) einen an die zweite Stirnkante (77) angrenzenden Seitenwandanschlag (81) aufweist, gegen welchen das Fördergut (5) beim Transport anlegbar ist, um ein Herausfallen des Förderguts (5) aus dem Fördergutbehälter (1) zu verhindern.

8. Beladestation nach Anspruch 1, **dadurch gekennzeichnet, dass** das biegeschlaffe Material (33) zur zumindest teilweisen Versteifung des Fördergutbehälters (1) zumindest teilweise beplankt ist, wobei die Gleitfläche (29) an der Beplankung ausgebildet ist.

9. Beladestation nach Anspruch 1, **dadurch gekennzeichnet, dass** das biegeschlaffe Material antistatisch ist, insbesondere einen spezifischen Oberflächenwiderstand (surface resistivity) zwischen 10⁹ Ohm/Square und 10¹² Ohm/Square aufweist.

10. Beladestation nach Anspruch 1, **dadurch gekennzeichnet, dass** das biegeschlaffe Material (33) elektrisch leitende Fasern (121) und/oder oder elektrisch leitende Drähte aufweist.

11. Entladestation (105) mit einem Fördergutbehälter (1) zum Entladen des mit zumindest einem Fördergut (5) beladenen Fördergutbehälters (1), welcher Fördergutbehälter (1) zum Transportieren von Fördergut (5) ausgebildet und zwischen einer Öffnungsstellung und Schließstellung verstellbar ist, umfassend
- eine Vorderwand (65),
- eine Rückwand (67),
- einen an die Vorderwand (65) und Rückwand (67) angrenzenden Boden (11),
- einen Aufbewahrungsraum (69), in dem das Fördergut (5) transportierbar ist, und welcher zwischen der Vorderwand (65), der Rückwand (67) und dem Boden (11) ausgebildet ist, wobei der Aufbewahrungsraum (69) in der Öffnungsstellung zugänglich und in der Schließstellung volumenminimiert ist,
wobei der Boden (11)
- eine erste Längskante (71), an welche die Vorderwand (65) anschließt,
- eine zur ersten Längskante (71) mit einem Abstand verlaufende zweite Längskante (73), an welche die Rückwand (67) anschließt,
- eine zwischen der ersten Längskante (71) und der zweiten Längskante (73) verlaufende erste Stirnkante (75),
- eine zwischen der ersten Längskante (71) und der zweiten Längskante (73) verlaufende zweite Stirnkante (77),
ausbildet, und
wobei der Fördergutbehälter (1) in seiner Öffnungsstellung eine durch die Vorderwand (65) und Rückwand (67) begrenzte und an die erste Stirnkante (75) angrenzende Entladeöffnung (79') aufweist,
wobei der Boden (11) eine in die Entladeöffnung (79') mündende Aufnahmefläche (133) ausbildet, auf welcher das Fördergut (5) lagern kann, und welche sich zwischen den beiden Längskanten (71, 73) und den beiden Stirnkanten (75, 77) erstreckt und welche eine Gleitfläche (29) definiert,
welche Entladestation (105) zum Entladen des mit zumindest einem Fördergut (5) beladenen Fördergutbehälters (1) ausgebildet ist, umfassend
- eine Hängefördervorrichtung (3) zum Antransport des Fördergutbehälters (1) in die Entladestation (105) und Abtransport des Fördergutbehälters (1) aus der Entladestation (105),
- eine Öffnungsvorrichtung (89, 107) zum Verstellen des Fördergutbehälters (1) zwischen der Schließstellung, in welcher das Fördergut (5) im Aufbewahrungsraum (69) verstaut oder verstaubar ist, und der Öffnungsstellung, in welcher das Fördergut (5) im Aufbewahrungsraum (69) zugänglich ist,
**dadurch gekennzeichnet, dass**
die Vorderwand (65), die Rückwand (67) und der Boden (11) des Fördergutbehälters (1) ein an einem Rahmen (31) aufgehängtes biegeschlaffes Material (33) aufweisen, und dass
die Entladestation (105) zudem umfasst:
- eine Entladevorrichtung (109) zum Entladen des in die Öffnungsstellung verstellten Fördergutbehälters (1), mit welcher der Boden (11) zwischen einer Transportstellung, in der das Fördergut (5) im Aufbewahrungsraum (69) gelagert ist, und einer Auswerfstellung, in der das Fördergut (5) aus dem Aufbewahrungsraum (69) auswerfbar ist, neigbar ist.

12. Entladestation nach Anspruch 11, **dadurch gekennzeichnet, dass** zusätzlich eine Feststellvorrichtung (97) zum zeitweisen Festsetzen des Fördergutbehälters während eines Entladevorgangs vorgesehen ist.

13. Entladestation nach Anspruch 11 oder 12, **dadurch gekennzeichnet, dass** zusätzlich ein Führungsprofil (99) zum Führen des Rahmens (31) des Fördergutbehälters (1) vorgesehen ist.

14. Entladestation nach einem der Ansprüche 11 bis 13, **dadurch gekennzeichnet, dass** die Öffnungsvorrichtung (107) zumindest eine mittels eines Antriebs (103) zwischen einer ersten Klappenstellung und einer zweiten Klappenstellung bewegbare Taschenöffnungsklappe (101) zum Verstellen des Fördergutbehälters (1) zwischen der Schließstellung und der Öffnungsstellung aufweist.

15. Entladestation nach Anspruch 14, **dadurch gekennzeichnet, dass** die Taschenöffnungsklappe (101) in der zweiten Klappenstellung eine in Fahrtrichtung des Fördergutbehälters (1) verlaufende Führungsfläche (115) zum Führen des Rahmens (31) bei einem Verlassen der Entladestation (105) aufweist.

16. Entladestation nach Anspruch 14 oder 15, **dadurch gekennzeichnet, dass** der Rahmen (31) in der zweiten Klappenstellung zwischen der Taschenöffnungsklappe (101) und dem Führungsprofil (99) kraftschlüssig fixiert ist.

17. Entladestation nach einem der Ansprüche 11 bis 16, **dadurch gekennzeichnet, dass** die Entladevorrichtung (109) eine Mitnehmermechanik (21) aufweist, mittels der der Boden (11) zwischen der Transportstellung und der Auswerfstellung verstellbar ist.

18. Entladestation nach einem der Ansprüche 11 bis 17, **dadurch gekennzeichnet, dass** die Entladevorrichtung (109) eine mittels eines Entladeantriebs (111) zwischen einer Ausgangsstellung und einer Betätigungsstellung bewegbare Taschenentladungsvorrichtung (113), insbesondere Taschenentladungsbügel, zum Verstellen des Bodens (11) zwischen der Transportstellung und der Auswerfstellung aufweist.

19. Entladestation nach Anspruch 11, **dadurch gekennzeichnet, dass** der Fördergutbehälter (1) einen an die zweite Stirnkante (77) angrenzenden Seitenwandanschlag (81) aufweist, gegen welchen das Fördergut (5) beim Transport anlegbar ist, um ein Herausfallen des Förderguts (5) aus dem Fördergutbehälter (1) zu verhindern.

20. Entladestation nach Anspruch 11, **dadurch gekennzeichnet, dass** das biegeschlaffe Material (33) zur zumindest teilweisen Versteifung des Fördergutbehälters (1) zumindest teilweise beplankt ist, wobei die Gleitfläche (29) an der Beplankung ausgebildet ist.

21. Entladestation nach Anspruch 11, **dadurch gekennzeichnet, dass** das biegeschlaffe Material antistatisch ist, insbesondere einen spezifischen Oberflächenwiderstand (surface resistivity) zwischen 10⁹ Ohm/Square und 10¹² Ohm/Square aufweist.

22. Entladestation nach Anspruch 11, **dadurch gekennzeichnet, dass** das biegeschlaffe Material (33) elektrisch leitende Fasern (121) und/oder oder elektrisch leitende Drähte aufweist.

23. Hängefördersystem (117) umfassend eine Hängefördervorrichtung (3) mit einem Fördergutbehälter (1) zum Transportieren von Fördergut (5), einer Beladestation (87) zum manuellen oder automatischen Beladen eines Fördergutbehälters (1) und einer Entladestation (105) zum Entladen eines mit zumindest einem Fördergut (5) beladenen Fördergutbehälters (1), **dadurch gekennzeichnet, dass** die Beladestation (87) nach einem der Ansprüche 1 bis 10 und/oder die Entladestation (105) nach einem der Ansprüche 11 bis 22 ausgebildet ist.

24. Verfahren zum Entladen eines Förderguts (5) aus einem Fördergutbehälter (1), bei dem der Fördergutbehälter (1) auf einer Hängefördervorrichtung (3) zu einer Entladestation (105) in eine Bereitstellungsposition transportiert wird, **dadurch gekennzeichnet, dass** der Fördergutbehälter (1) an der Entladestation (105)
i) in einem ersten Schritt durch eine Öffnungsvorrichtung (89, 107) oder von einer Bedienperson aus einer Schließstellung, in welcher das Fördergut (5) im Aufbewahrungsraum (69) verstaut ist, in eine Öffnungsstellung, in welcher das Fördergut (5) im Aufbewahrungsraum (69) zugänglich ist, verstellt wird, und anschließend
ii) in einem zweiten Schritt durch eine Entladevorrichtung (109) der Boden (11) aus einer Transportstellung, in der das Fördergut (5) im Aufbewahrungsraum (69) gelagert ist, in eine Auswerfstellung, in der das Fördergut (5) aus dem Aufbewahrungsraum (69) auswerfbar ist, geneigt wird, sodass in der Auswerfstellung ein der Belade- und/oder Entladeöffnung (79) gegenüberliegender hinterer Bodenbereich höher liegt als ein vorderer Bodenbereich und das Fördergut (5) aus dem Fördergutbehälter (1) rutscht.

25. Verfahren zum manuellen oder automatischen Beladen eines Fördergutbehälters (1) mit zumindest einem Fördergut (5), welcher Fördergutbehälter (1) zum Transportieren von Fördergut (5) ausgebildet und zwischen einer Öffnungsstellung und Schließstellung verstellbar ist, umfassend
- eine Vorderwand (65),
- eine Rückwand (67),
- einen an die Vorderwand (65) und Rückwand (67) angrenzenden Boden (11),
- einen Aufbewahrungsraum (69), in dem das Fördergut (5) transportierbar ist, und welcher zwischen der Vorderwand (65), der Rückwand (67) und dem Boden (11) ausgebildet ist, wobei der Aufbewahrungsraum (69) in der Öffnungsstellung zugänglich und in der Schließstellung volumenminimiert ist,
wobei der Boden (11)
- eine erste Längskante (71), an welche die Vorderwand (65) anschließt,
- eine zur ersten Längskante (71) mit einem Abstand verlaufende zweite Längskante (73), an welche die Rückwand (67) anschließt,
- eine zwischen der ersten Längskante (71) und der zweiten Längskante (73) verlaufende erste Stirnkante (75),
- eine zwischen der ersten Längskante (71) und der zweiten Längskante (73) verlaufende zweite Stirnkante (77),
ausbildet, und
wobei der Fördergutbehälter (1) in seiner Öffnungsstellung eine durch die Vorderwand (65) und Rückwand (67) begrenzte und an die erste Stirnkante (75) angrenzende Beladeöffnung (79) aufweist,
wobei der Boden (11) eine in die Beladeöffnung (79) mündende Aufnahmefläche (133) ausbildet, auf welcher das Fördergut (5) lagern kann, und welche sich zwischen den beiden Längskanten (71, 73) und den beiden Stirnkanten (75, 77) erstreckt und welche eine Gleitfläche (29) definiert,
bei dem der Fördergutbehälter (1) auf einer Hängefördervorrichtung (3) zu einer Beladestation (87) transportiert und in eine Bereitstellungsposition vor einer Beladevorrichtung (91) oder einer Beschickungsvorrichtung (93) bereitgestellt wird,
**dadurch gekennzeichnet, dass**
die Vorderwand (65), die Rückwand (67) und der Boden (11) des Fördergutbehälters (1) ein an einem Rahmen (31) aufgehängtes biegeschlaffes Material (33) aufweisen,
und wobei
i) in einem ersten Schritt der Fördergutbehälter (1) durch eine Öffnungsvorrichtung (89, 107) oder von einer Bedienperson aus einer Schließstellung, in welcher der Aufbewahrungsraum (69) volumenminimiert ist, in eine Öffnungsstellung, in welcher der Aufbewahrungsraum (69) zugänglich ist, verstellt wird, und anschließend
ii) in einem zweiten Schritt das Fördergut (5) von der Beladevorrichtung (91) oder der Beschickungsvorrichtung (93) in den Aufbewahrungsraum (69) des in die Öffnungsstellung verstellten Fördergutbehälters (1) verbracht wird, wobei eine Arbeitsebene (95) an der Beladevorrichtung (91) oder der Beschickungsvorrichtung (93) im Wesentlichen mit dem Boden (11) des Fördergutbehälters (1) fluchtet oder geringfügig oberhalb des Bodens (11) des Fördergutbehälters (1) verläuft.

## Claims

1. A loading station (87) having an article container (1) for manual or automated loading of the article container (1) with an article (5), which article container (1) is formed for transporting article (5) and is adjustable between an opened position and a closed position, comprising
- a front wall (65),
- a rear wall (67),
- a bottom (11) adjoining the front wall (65) and rear wall (67),
- a storage space (69), in which the article (5) can be transported, and which is formed between the front wall (65), the rear wall (67) and the bottom (11), wherein the storage space (69) is accessible in the opened position and of reduced volume in the closed position,
wherein the bottom (11) forms
- a first longitudinal edge (71), which is adjoined by the front wall (65),
- a second longitudinal edge (73) extending spaced apart from the first longitudinal edge (71), which is adjoined by the rear wall (67),
- a first end edge (75) extending between the first longitudinal edge (71) and the second longitudinal edge (73),
- a second end edge (77) extending between the first longitudinal edge (71) and the second longitudinal edge (73),
wherein the article container (1) in its opened position comprises a loading opening (79) delimited by the front wall (65) and rear wall (67) and adjoining the first end edge (75), wherein the bottom (11) forms a receiving surface (133) ending in the loading opening (79), on which the article (5) can be stored and which extends between the two longitudinal edges (71, 73) and the two end edges (75, 77) and which defines the sliding surface (29),
which loading station (87) is formed for manual or automated loading of the article container (1), comprising
- an overhead conveying device (3) for transporting the article container (1) into the loading station (87) and transporting the article container (1) out of the loading station (87),
- an opening device (89, 107) for adjusting the article container (1) between the closed position, in which the storage space (69) is of reduced volume, and the opened position, in which the storage space (69) is accessible, and
- for loading the article container (1), which has been adjusted into the opened position,
i) either a loading device (91),
ii) or a feeding device (93) operated in an automated manner,
iii) or the loading device (91) and the feeding device (93) operated in an automated manner, **characterized in that**
the front wall (65), the rear wall (67) and the bottom (11) of the article container (1) comprise a flexible material (33) suspended on a frame (31), and
the loading device (91) or the feeding device (93) defines a working plane (95), which extends essentially in alignment with the bottom (11) of the article container (1) or slightly above the bottom (11) of the article container (1), so that an essentially continuous transition between the working plane (95) and the bottom (11) is formed.

2. The loading station (87) according to claim 1, **characterized in that** a locking device (97) for temporarily fixing the article container (1) during a loading operation is additionally provided.

3. The loading station according to any one of the claims 1 or 2, **characterized in that** a guide profile (99) for guiding the frame (31) of the article container (1) is additionally provided.

4. The loading station according to any one of the claims 1 to 3, **characterized in that** the opening device (107) of the loading station (87) comprises at least one bag opening flap (101) movable by means of a drive (103) between a first flap position and a second flap position for adjusting the article container (1) between the closed position and the opened position.

5. The loading station according to claim 4, **characterized in that** the bag opening flap (101) in the second flap position comprises a guide surface (115) for guiding the frame (31) during a leaving of the loading station (87), which extends in a direction of movement of the article container (1).

6. The loading station according to claim 4 or 5, **characterized in that** the frame (31) in the second flap position is fixed in a friction fit between the bag opening flap (101) and the guide profile (99).

7. The loading station according to claim 1, **characterized in that** the article container (1) comprises a side wall stop (81) adjoining the second end edge (77), against which the articles (5) can be applied during transport in order to prevent the articles (5) from falling out of the article container (1).

8. The loading station according to claim 1, **characterized in that** the flexible material (33) is at least partially planked for the at least partial stiffening of the article container (1), wherein the sliding surface (29) is formed on the planking.

9. The loading station according to claim 1, **characterized in that** the flexible material is antistatic, in particular comprises a specific surface resistivity between 109 ohm/square and 1012 ohm/square.

10. The loading station according to claim 1, **characterized in that** the flexible material (33) comprises electrically conductive fibers (121) and/or electrically conductive wires.

11. An unloading station (105) having an article container (1) for unloading the article container (1) loaded with at least one article (5), which article container (1) is formed for transporting article (5) and is adjustable between an opened position and a closed position, comprising
- a front wall (65),
- a rear wall (67),
- a bottom (11) adjoining the front wall (65) and rear wall (67),
- a storage space (69), in which the article (5) can be transported, and which is formed between the front wall (65), the rear wall (67) and the bottom (11), wherein the storage space (69) is accessible in the opened position and of reduced volume in the closed position,
wherein the bottom (11) forms
- a first longitudinal edge (71), which is adjoined by the front wall (65),
- a second longitudinal edge (73) extending spaced apart from the first longitudinal edge (71), which is adjoined by the rear wall (67),
- a first end edge (75) extending between the first longitudinal edge (71) and the second longitudinal edge (73),
- a second end edge (77) extending between the first longitudinal edge (71) and the second longitudinal edge (73),
and
wherein the article container (1) in its opened position comprises an unloading opening (79') delimited by the front wall (65) and rear wall (67) and adjoining the first end edge (75),
wherein the bottom (11) forms a receiving surface (133) ending in the unloading opening (79'), on which the article (5) can be stored and which extends between the two longitudinal edges (71, 73) and the two end edges (75, 77) and which defines the sliding surface (29'),
which unloading station (105) is formed for unloading the article container (1) loaded with at least one article (5), comprising
- an overhead conveying device (3) for transporting the article container (1) into the unloading station (105) and transporting the article container (1) out of the unloading station (105),
- an opening device (89, 107) for adjusting the article container (1) between the closed position, in which the article (5) is stowed or stowable in the storage space (69), and the opened position, in which the article (5) is accessible in the storage space (69),
**characterized in that**
the front wall (65), the rear wall (67) and the bottom (11) of the article container (1) comprise a flexible material (33) suspended on a frame (31), and that the unloading station (105) additionally comprises:
- an unloading device (109) for unloading the article container (1), which has been adjusted into the opened position, with the help of which the bottom (11) is inclinable between a transport position, in which the article (5) is stored in the storage space (69), and a discharge position, in which the article (5) can be discharged from the storage space (69).

12. The unloading station according to claim 11, **characterized in that** a locking device (97) for temporarily fixing the article container during an unloading operation is additionally provided.

13. The unloading station according claim 11 or 12, **characterized in that** a guide profile (99) for guiding the frame (31) of the article container (1) is additionally provided.

14. The unloading station according to any one of the claims 11 to 13, **characterized in that** the opening device (107) comprises at least one bag opening flap (101) movable by means of a drive (103) between a first flap position and a second flap position for adjusting the article container (1) between the closed position and the opened position.

15. The unloading station according to claim 14, **characterized in that** the bag opening flap (101) in the second flap position comprises a guide surface (115) for guiding the frame (31) during a leaving of the unloading station (105) which extends in a direction of movement of the article container (1).

16. The unloading station according to claim 14 or 15, **characterized in that** the frame (31) in the second flap position is fixed in a friction fit between the bag opening flap (101) and the guide profile (99).

17. The unloading station according to any one of the claims 11 to 16, **characterized in that** the unloading device (109) comprises a pusher-dog mechanism (21), by means of which the bottom (11) is adjustable between the transport position and the discharge position.

18. The unloading station according to any one of the claims 11 to 17, **characterized in that** the unloading device (109) comprises a bag unloading device (113), in particular bag unloading brackets, movable by means of an unloading drive (111) between an initial position and an actuation position for adjusting the bottom (11) between the transport position and the discharge position.

19. The unloading station according to claim 11, **characterized in that** the article container (1) comprises a side wall stop (81) adjoining the second end edge (77), against which the articles (5) can be applied during transport in order to prevent the articles (5) from falling out of the article container (1).

20. The unloading station according to claim 11, **characterized in that** the flexible material (33) is at least partially planked for the at least partial stiffening of the article container (1), wherein the sliding surface (29) is formed on the planking.

21. The unloading station according to claim 11, **characterized in that** the flexible material is antistatic, in particular comprises a specific surface resistivity between 109 ohm/square and 1012 ohm/square.

22. The unloading station according to claim 11, **characterized in that** the flexible material (33) comprises electrically conductive fibers (121) and/or electrically conductive wires.

23. An overhead conveying system (117) comprising an overhead conveying device (3) having an article container (1) for transporting articles (5), a loading station (87) for manual or automated loading of an article container (1) and an unloading station (105) for unloading an article container (1) loaded with at least one article (5), **characterized in that** the loading station (87) is formed according to any one of the claims 1 to 10 and/or the unloading station (105) is formed according to any one of the claims 11 to 22.

24. A method for unloading an article (5) from an article container (1), in which the article container (1) is transported on an overhead conveying device (3) to an unloading station (105) into a provisioning position, **characterized in that** the article container (1) at the unloading station (105)
i) in a first step is adjusted by means of an opening device (89, 107) or by an operator from a closed position, in which the article (5) is stowed in the storage space (69), into an opened position, in which the article (5) is accessible in the storage space (69), and subsequently
ii) in a second step the bottom (11) is inclined by means of an unloading device (109) from a transport position, in which the article (5) is stored in the storage space (69), into a discharge position, in which the article (5) can be discharged from the storage space (69), so that in the discharge position a rear region of the bottom positioned opposite the loading and/or unloading opening (79) is positioned higher than a front region of the bottom, and the article (5) slides out of the article container (1).

25. A method for manual or automated loading of an article container (1) with at least one article (5), which article container (1) is formed for transporting article (5) and is adjustable between an opened position and a closed position, comprising
- a front wall (65),
- a rear wall (67),
- a bottom (11) adjoining the front wall (65) and rear wall (67),
- a storage space (69), in which the article (5) can be transported, and which is formed between the front wall (65), the rear wall (67) and the bottom (11), wherein the storage space (69) is accessible in the opened position and of reduced volume in the closed position,
wherein the bottom (11) forms
- a first longitudinal edge (71), which is adjoined by the front wall (65),
- a second longitudinal edge (73) extending spaced apart from the first longitudinal edge (71), which is adjoined by the rear wall (67),
- a first end edge (75) extending between the first longitudinal edge (71) and the second longitudinal edge (73),
- a second end edge (77) extending between the first longitudinal edge (71) and the second longitudinal edge (73),
and
wherein the conveyed goods container (1) in its opened position comprises a loading opening (79) delimited by the front wall (65) and rear wall (67) and abutting on the first end edge (75),
wherein the bottom (11) forms a receiving surface (133) ending in the loading opening (79), on which the article (5) can be stored and which extends between the two longitudinal edges (71, 73) and the two end edges (75, 77) and which defines the sliding surface (29),
in which the article container (1) is transported on an overhead conveying device (3) to a loading station (87) and provisioned in a provisioning position in front of a loading device (91) or a feeding device (93),
**characterized in that**
the front wall (65), the rear wall (67) and the bottom (11) of the article container (1) comprise a flexible material (33) suspended on a frame (31),
and wherein
i) in a first step the article container (1) is adjusted by means of an opening device (89, 107) or by an operator from a closed position, in which the storage space (69) is reduced in volume, into an opened position, in which the storage space (69) is accessible, and subsequently
ii) in a second step the article (5) is brought by the loading device (91) or the feeding device (93) into the storage space (69) of the article container (1), which has been adjusted into the opened position, wherein a working plane (95) at the loading device (91) or the feeding device (93) is essentially in alignment with the bottom (11) of the article container (1) or extends slightly above the bottom (11) of the article container (1).

## Revendications

1. Station de chargement (87) avec un contenant pour produit à transporter (1) pour le chargement manuel ou automatique du contenant pour produit à transporter (1) avec un produit à transporter (5), ce contenant pour produit à transporter (1) étant conçu pour le transport d'un produit à transporter (5) et étant mobile entre une position d'ouverture et une position de fermeture, comprenant :
- une paroi avant (65),
- une paroi arrière (67),
- un fond (11) adjacent à la paroi avant (65) et à la paroi arrière (67),
- un espace de stockage (69), dans lequel le produit à transporter (5) peut être transporté et qui est prévu entre la paroi avant (65), la paroi arrière (67) et le fond (11), dans lequel l'espace de stockage (69) est accessible dans la position d'ouverture et est réduit en volume dans la position de fermeture,
dans lequel le fond (11) présente
- une première arête longitudinale (71) à laquelle se raccorde la paroi avant (65),
- une deuxième arête longitudinale (73), s'étendant à une certaine distance de la première arête longitudinale (71), à laquelle se raccorde la paroi arrière (67),
- une première arête frontale (75) s'étendant entre la première arête longitudinale (71) et la deuxième arête longitudinale (73),
- une deuxième arête frontale (77) s'étendant entre la première arête longitudinale (71) et la deuxième arête longitudinale (73),
dans lequel le contenant pour produit à transporter (1) comprend, dans sa position d'ouverture, une ouverture de chargement (79) limitée par la paroi avant (65) et la paroi arrière (67) et adjacente à la première arête frontale (75),
dans lequel le fond (11) forme une surface de logement (133) débouchant dans l'ouverture de chargement (79), sur laquelle le produit à transporter (5) peut se déposer et qui s'étend entre les deux arêtes longitudinales (71, 73) et les deux arêtes frontales (75, 77) et qui définit une surface de glissement (29),
cette station de chargement (87) étant conçue pour le chargement manuel ou automatique du contenant pour produit à transporter (1), comprenant
- un dispositif de transport suspendu (3) pour l'introduction du contenant pour produit à transporter (1) dans la station de chargement (87) et l'évacuation du contenant pour produit à transporter (1) hors de la station de chargement (87),
- un dispositif d'ouverture (89, 107) pour le déplacement du contenant pour produit à transporter (1) entre la position de fermeture, dans laquelle l'espace de stockage (69) est réduit en volume, et la position d'ouverture, dans laquelle l'espace de stockage (69) est accessible et
- comprend, pour le chargement du contenant pour produit à transporter (1) déplacé vers la position d'ouverture :
i) un dispositif de chargement (91)
ii) ou un dispositif d'alimentation automatisé (93),
iii) ou le dispositif de chargement (91) et le dispositif d'alimentation automatisé (93), **caractérisée en ce que**
la paroi avant (65), la paroi arrière (67) et le fond (11) du contenant pour produit à transporter (1) comprennent un matériau flexible (33) suspendu à un châssis (31) et le dispositif de chargement (91) ou le dispositif d'alimentation (93) définit un plan de travail (95) qui s'étend de manière globalement alignée avec le fond (11) du contenant pour produit à transporter (1) ou légèrement au-dessus du fond (11) du contenant pour produit à transporter (1), de façon à ce qu'une transition globalement progressive soit réalisée entre le plan de travail (95) et le fond (11).

2. Station de chargement (87) selon la revendication 1, **caractérisée en ce que**, en outre, un dispositif d'immobilisation (97) est prévu pour l'immobilisation temporaire du contenant pour produit à transporter (1) pendant un processus de chargement.

3. Station de chargement selon l'une des revendications 1 ou 2, **caractérisée en ce que**, en outre, un profilé de guidage (99) est prévu pour le guidage du châssis (31) du contenant pour produit à transporter (1).

4. Station de chargement selon l'une des revendications 1 à 3, **caractérisée en ce que** le dispositif d'ouverture (107) de la station de chargement (87) comprend au moins un clapet d'ouverture de poche (101) mobile au moyen d'un entraînement (103) entre une première position de clapet et une deuxième position de clapet, pour le déplacement du contenant pour produit à transporter (1) entre la position de fermeture et la position d'ouverture.

5. Station de chargement selon la revendication 4, **caractérisée en ce que**, dans la deuxième position de clapet, le clapet d'ouverture de poche (101) comprend une surface de guidage (115) s'étendant dans la direction de déplacement du contenant pour produit à transporter (1), pour le guidage du châssis (31) lorsqu'il quitte la station de chargement (87).

6. Station de chargement selon la revendication 4 ou 5, **caractérisée en ce que**, dans la deuxième position de clapet, le châssis (31) est fixé par force entre le clapet d'ouverture de poche (101) et le profilé de guidage (99).

7. Station de chargement selon la revendication 1, **caractérisée en ce que** le contenant pour produit à transporter (1) comprend une butée de paroi latérale (81) adjacente à la deuxième arête frontale (77), contre laquelle le produit à transporter (5) peut s'appuyer lors du transport, afin d'empêcher une chute du produit à transporter (5) hors du contenant pour produit à transporter (1).

8. Station de chargement selon la revendication 1, **caractérisée en ce que** le matériau flexible (33) est renforcé au moins partiellement pour la rigidification au moins partielle du contenant pour produit à transporter (1), dans lequel la surface de glissement (29) est réalisée sur le renforcement.

9. Station de chargement selon la revendication 1, **caractérisée en ce que** le matériau flexible est antistatique, plus particulièrement il présente une résistance superficielle spécifique (surface resistivity) entre 10⁹ Ohm/square et 10¹² Ohm/square.

10. Station de chargement selon la revendication 1, **caractérisée en ce que** le matériau flexible (33) comprend des fibres électro-conductrices (121) et/ou des fils électro-conducteurs.

11. Station de déchargement (105) avec un contenant pour produit à transporter (1) pour le déchargement du contenant pour produit à transporter (1) chargé avec un produit à transporter (5), ce contenant pour produit à transporter (1) étant conçu pour le transport de produit à transporter (5) et pouvant être déplacé entre une position d'ouverture et une position de fermeture, comprenant :
- une paroi avant (65),
- une paroi arrière (67),
- un fond (11) adjacent à la paroi avant (65) et à la paroi arrière (67),
- un espace de stockage (69), dans lequel le produit à transporter (5) peut être transporté et qui est prévu entre la paroi avant (65), la paroi arrière (67) et le fond (11), dans lequel l'espace de stockage (69) est accessible dans la position d'ouverture et est réduit en volume dans la position de fermeture,
dans laquelle le fond (11) présente
- une première arête longitudinale (71) à laquelle se raccorde la paroi avant (65),
- une deuxième arête longitudinale (73), s'étendant à une certaine distance de la première arête longitudinale (71), à laquelle se raccorde la paroi arrière (67),
- une première arête frontale (75) s'étendant entre la première arête longitudinale (71) et la deuxième arête longitudinale (73),
- une deuxième arête frontale (77) s'étendant entre la première arête longitudinale (71) et la deuxième arête longitudinale (73), et
dans laquelle le contenant pour produit à transporter (1) comprend, dans sa position d'ouverture, une ouverture de déchargement (79') limitée par la paroi avant (65) et la paroi arrière (67) et adjacente à la première arête frontale (75),
dans laquelle le fond (11) forme une surface de logement (133) débouchant dans l'ouverture de déchargement (79'), sur laquelle le produit à transporter (5) peut se déposer et qui s'étend entre les deux arêtes longitudinales (71, 73) et les deux arêtes frontales (75, 77) et qui définit une surface de glissement (29),
cette station de déchargement (105) étant conçue pour le déchargement du contenant pour produit à transporter (1) chargé avec au moins un produit à transporter (5), comprenant :
- un dispositif de transport suspendu (3) pour l'introduction du contenant pour produit à transporter (1) dans la station de déchargement (105) et l'évacuation du contenant pour produit à transporter (1) hors de la station de déchargement (105),
- un dispositif d'ouverture (89, 107) pour le déplacement du contenant pour produit à transporter (1) entre la position de fermeture, dans laquelle le produit à transporter (5) est stocké ou peut être stocké dans l'espace de stockage (69), et la position d'ouverture, dans laquelle le produit à transporter (5) dans l'espace de stockage (69) est accessible, **caractérisée en ce que**
la paroi avant (65), la paroi arrière (67) et le fond (11) du contenant pour produit à transporter (1) comprennent un matériau flexible (33) suspendu à un châssis (31) et la station de déchargement (105) comprend en outre :
- un dispositif de déchargement (109) pour le déchargement du contenant pour produit à transporter (1) déplacé dans la position d'ouverture, avec lequel le fond (11) peut être incliné entre une position de transport, dans laquelle le produit à transporter (5) est stocké dans l'espace de stockage (69), et une position d'éjection, dans laquelle le produit à transporter (5) peut être éjecté hors de l'espace de stockage (69).

12. Station de déchargement selon la revendication 11, **caractérisée en ce que**, en outre, un dispositif d'immobilisation (97) est prévu pour l'immobilisation temporaire du contenant pour produit à transporter pendant un processus de déchargement.

13. Station de déchargement selon la revendication 11 ou 12, **caractérisée en ce que**, en outre, un profilé de guidage (99) est prévu pour le guidage du châssis (31) du contenant pour produit à transporter (1).

14. Station de déchargement selon l'une des revendications 11 à 13, **caractérisée en ce que** le dispositif d'ouverture (107) comprend au moins un clapet d'ouverture de poche (101) mobile au moyen d'un entraînement (103) entre une première position de clapet et une deuxième position de clapet, pour le déplacement du contenant pour produit à transporter (1) entre la position de fermeture et la position d'ouverture.

15. Station de déchargement selon la revendication 14, **caractérisée en ce que**, dans la deuxième position de clapet, le clapet d'ouverture de poche (101) comprend une surface de guidage (115) s'étendant dans la direction de déplacement du contenant pour produit à transporter (1), pour le guidage du châssis (31) lorsqu'il quitte la station de déchargement (105).

16. Station de déchargement selon la revendication 14 ou 15, **caractérisée en ce que**, dans la deuxième position de clapet, le châssis (31) est fixé par force entre le clapet d'ouverture de poche (101) et le profilé de guidage (99).

17. Station de déchargement selon l'une des revendications 11 à 16, **caractérisée en ce que** le dispositif de déchargement (109) comprend un mécanisme d'entraînement (21) au moyen duquel le fond (11) peut être déplacé entre la position de transport et la position d'éjection.

18. Station de déchargement selon l'une des revendications 11 à 17, **caractérisée en ce que** le dispositif de déchargement (109) comprend un dispositif de déchargement de poche (113) mobile au moyen d'un entraînement de déchargement (111) entre une position initiale et une position d'actionnement, plus particulièrement un étrier de déchargement de poche, pour le déplacement du fond (11) entre la position de transport et la position d'éjection.

19. Station de déchargement selon la revendication 11, **caractérisée en ce que** le contenant pour produit à transporter (1) comprend une butée de paroi latérale (81) adjacente à la deuxième arête frontale (77), contre laquelle le produit à transporter (5) peut s'appuyer lors du transport, afin d'empêcher une chute du produit à transporter (5) hors du contenant pour produit à transporter (1).

20. Station de déchargement selon la revendication 11, **caractérisée en ce que** le matériau flexible (33) est renforcé au moins partiellement pour la rigidification au moins partielle du contenant pour produit à transporter (1), dans lequel la surface de glissement (29) est réalisée sur le renforcement.

21. Station de déchargement selon la revendication 11, **caractérisée en ce que** le matériau flexible est antistatique, plus particulièrement il présente une résistance superficielle spécifique (surface resistivity) entre 10⁹ Ohm/square et 10¹² Ohm/square.

22. Station de déchargement selon la revendication 11, **caractérisée en ce que** le matériau flexible (33) comprend des fibres électro-conductrices (121) et/ou des fils électro-conducteurs.

23. Système de transport suspendu (117) comprenant un dispositif de transport suspendu (3) avec un contenant pour produit à transporter (1) pour le transport d'un produit à transporter (5), une station de chargement (87) pour le chargement manuel ou automatique d'un contenant pour produit à transporter (1) et une station de déchargement (105) pour le déchargement d'un contenant pour produit à transporter (1) chargé avec au moins un produit à transporter (5), **caractérisé en ce que** la station de chargement (87) est conçue selon l'une des revendications 1 à 10 et/ou la station de déchargement (105) est conçue selon l'une des revendications 11 à 22.

24. Procédé de déchargement d'un produit à transporter (5) hors d'un contenant pour produit à transporter (1), dans lequel le contenant pour produit à transporter (1) est transporté sur un dispositif de transport suspendu (3) vers une station de déchargement (105) dans une position de mise à disposition, **caractérisé en ce que**, au niveau de la station de déchargement (105), le contenant pour produit à transporter (1) i) est déplacé, dans une première étape, par un dispositif d'ouverture (89, 107) ou par un opérateur, d'une position de fermeture, dans laquelle le produit à transporter (5) est stocké dans l'espace de stockage (69), vers une position d'ouverture dans laquelle le produit à transporter (5) dans l'espace de stockage (69) est accessible puis ii) dans une deuxième étape, le fond (11) est incliné, par un dispositif de déchargement (109), d'une position de transport, dans laquelle le produit à transporter (5) est stocké dans l'espace de stockage (69), vers une position d'éjection dans laquelle le produit à transporter (5) peut être éjecté hors de l'espace de stockage (69), de façon à ce que, dans la position d'éjection, une partie arrière du fond, opposée à l'ouverture de chargement et/ou de déchargement (79) soit plus haute qu'une partie avant du fond et que le produit à transporter (5) glisse hors du contenant pour produit à transporter (1).

25. Procédé de chargement manuel ou automatique d'un contenant pour produit à transporter (1) avec au moins un produit à transporter (5), ce contenant pour produit à transporter (1) étant conçu pour le transport d'un produit à transporter (5) et pouvant être déplacé entre une position d'ouverture et une position de fermeture, comprenant
- une paroi avant (65),
- une paroi arrière (67),
- un fond (11) adjacent à la paroi avant (65) et à la paroi arrière (67),
- une espace de stockage (69), dans lequel le produit à transporter (5) peut être transporté et qui est prévue entre la paroi avant (65), la paroi arrière (67) et le fond (11), dans lequel l'espace de stockage (69) est accessible dans la position d'ouverture et est réduit en volume dans la position de fermeture,
dans lequel le fond (11) présente
- une première arête longitudinale (71) à laquelle se raccorde la paroi avant (65),
- une deuxième arête longitudinale (73), s'étendant à une certaine distance de la première arête longitudinale (71), à laquelle se raccorde la paroi arrière (67),
- une première arête frontale (75) s'étendant entre la première arête longitudinale (71) et la deuxième arête longitudinale (73),
- une deuxième arête frontale (77) s'étendant entre la première arête longitudinale (71) et la deuxième arête longitudinale (73), et
dans lequel le contenant pour produit à transporter (1) comprend, dans sa position d'ouverture, une ouverture de chargement (79) limitée par la paroi avant (65) et la paroi arrière (67) et adjacente à la première arête frontale (75),
dans lequel le fond (11) forme une surface de logement (133) débouchant dans l'ouverture de chargement (79), sur laquelle le produit à transporter (5) peut se déposer et qui s'étend entre les deux arêtes longitudinales (71, 73) et les deux arêtes frontales (75, 77) et qui définit une surface de glissement (29),
dans lequel le contenant pour produit à transporter (1) est transporté sur un dispositif de transport suspendu (3) vers une station de chargement (87) et est mis à disposition dans une position de mise à disposition devant un dispositif de chargement (91) ou un dispositif d'alimentation (93),
**caractérisé en ce que**
la paroi avant (65), la paroi arrière (67) et le fond (11) du contenant pour produit à transporter (1) comprennent un matériau flexible (33) suspendu à un châssis (31) et dans lequel
i) le contenant pour produit à transporter (1) est déplacé, dans une première étape, par un dispositif d'ouverture (89, 107) ou par un opérateur, d'une position de fermeture, dans laquelle l'espace de stockage (69) est réduit en volume, vers une position d'ouverture dans laquelle l'espace de stockage (69) est accessible puis
ii) dans une deuxième étape, le produit à transporter (5) est déplacé du dispositif de chargement (91) ou du dispositif d'alimentation (93) vers l'espace de stockage (69) du contenant pour produit à transporter (1) déplacé vers la position d'ouverture, dans lequel un plan de travail (95) s'étend au niveau du dispositif de chargement (91) ou du dispositif d'alimentation (93) de manière globalement alignée avec le fond (11) du contenant pour produit à transporter (1) ou légèrement au-dessus du fond (11) du contenant pour produit à transporter (1).
